# EUROPEAN PATENT SPECIFICATION

(11) **EP 4 048 982 B1**
(45) Date of publication and mention of the grant of the patent: **26.11.2025**
(21) Application number: 20789085.6
(22) Date of filing: 08.10.2020
(51) Int. Cl.: G01F 1/684

(54) **SENSOR ASSEMBLY**
SENSORANORDNUNG
ENSEMBLE CAPTEUR

(30) Priority: 21.10.2019 US 201916658718
(43) Date of publication of application: 31.08.2022
(73) Proprietor: FLUSSO LIMITED, Cambridge, Cambridgeshire CB3 0QH (GB)
(72) Inventor: DE LUCA, Andrea, Cambridge, Cambridgeshire CB3 9BB (GB); LEE, Cerdin, Trumpington, Cambridgeshire CB2 9EX (GB); BUTLER, Tim, Histon, Cambridgeshire CB24 9YA (GB); GARDNER, Ethan, Kineton, Warwickshire CV35 0LA (GB); UDREA, Florin, Cambridge, Cambridgeshire CB2 0RB (GB); ROSSER, Christopher James, Cambridge, Cambridgeshire CB4 1WA (GB)
(74) Representative: Marks & Clerk LLP
(86) International application number: PCT/EP2020/078299
(87) International publication number: WO 2021/078529

(56) References cited:
- EP-A1- 2 381 225
- EP-A1- 3 032 227
- EP-B1- 2 482 043
- US-B2- 8 256 285

## Description

### Technical Field

This present disclosure relates to a fluid flow sensor assembly, particularly but not exclusively, the disclosure relates to a miniaturised fluid flow sensor assembly with reduced turbulences and manufacturable in very high volumes at low unit cost.

### Background

Thermal fluid flow sensors utilise the thermal interaction between the sensor itself and the fluid. Depending upon the physical phenomena governing the interaction, flow sensors can be can be classified into the following three categories:
(i) anemometric sensors that measure the convective heat transfer induced by fluid flow passing over a heated element;
(ii) calorimetric sensors that detect the asymmetry of the temperature profile generated by a heated element and caused by the forced convection of the fluid flow; and
(iii) time of flight (ToF) sensors that measure the time elapsed between the application and the sensing of a heat pulse.

Reviews of thermal fluid flow sensor have been published in **(**B. Van Oudheusden, "Silicon flow sensors," in Control Theory and Applications, IEE Proceedings D, 1988, pp. 373-380; B. Van Oudheusden, "Silicon thermal flow sensors," Sensors and Actuators A: Physical, vol. 30, pp. 5-26, 1992; N. Nguyen, "Micromachined flow sensors-A review," Flow measurement and Instrumentation, vol. 8, pp. 7-16, 1997; Y.-H. Wang et al., "MEMS-based gas flow sensors," Microfluidics and nanofluidics, vol. 6, pp. 333-346, 2009; J. T. Kuo et al., "Micromachined Thermal Flow Sensors-A Review," Micromachines, vol. 3, pp. 550-573, 2012). Further background can also be found in US6460411 by Kersjes et al.

Generally, a flow sensor assembly comprises a sensing die, a substrate and a housing. In most cases, the housing comprises a flow channel with an inlet and an outlet. The channel is a fluidic element responsible for driving the fluid across the sensing die. The design of the flow channel strongly affects the performance of the flow sensing assembly (e.g. range, accuracy, noise, etc.). Some ways of improving flow laminarity, or more generally a well-controlled flow, include:
(i) designing the flow channel long enough to achieve a fully developed flow, so not to have turbulences and a well-defined flow profile independently of the flow profile at the inlet of the channel;
(ii) designing the flow channel with a restrictor above the sensing surface to increase the flow velocity across the sensor and stimulate flow profile re-development;
(iii) designing the flow channel with restrictors away from the sensing surface to increase fluid impedance and have a flow velocity profile across the sensor more independent from the inlet flow profile;
(iv) designing the flow channel with smooth surfaces and corners to avoid the onset of turbulences;
(v) designing the flow channel with means (e.g. turns, reservoirs, etc.) to avoid the interaction and accumulation of particles (e.g. dust) on or in proximity of the flow sensing surface.

Electrical connections (e.g. bond wires) to the flow sensing die are often used. These connections can interfere with the fluid flow creating unwanted turbulences. Additionally, the fluid might mechanically and chemically interact with the interconnections, leading to their failure. Precautions for the protection of the connections may be taken into account.

The implementation of the aforementioned approaches can prove to be extremely challenging when the flow sensor assembly has a tiny form factor (e.g. sub-centimetre). This can be because there is not enough space to physically implement the solution or the technologies to implement the solution are too expensive for a product targeting high volume low cost consumer markets.

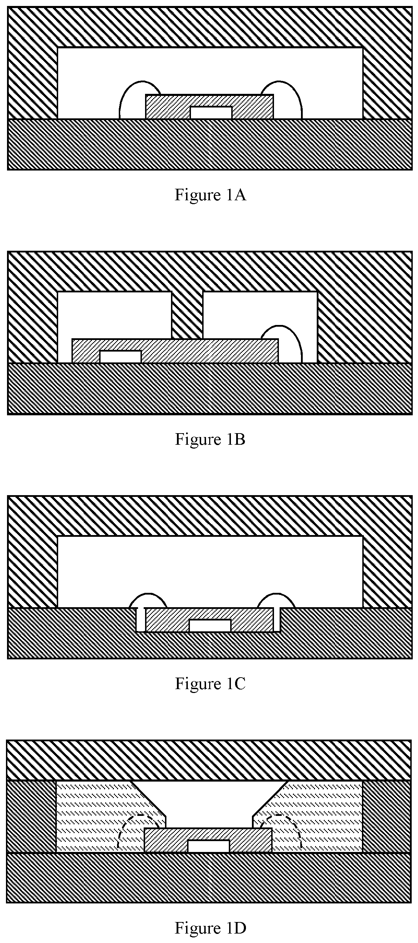

There are four assembly strategies used in the state-of-the-art, as shown in Figures 1A to 1D:
in Fig 1A the flow sensing die and electrical connections are exposed to fluid flow in the flow channel;
in Fig 1B the flow sensing area of the flow sensing die is exposed to fluid flow in the flow channel and the electrical connections are isolated from the flow sensing channel in a secondary volume;
in Fig 1C the flow sensing die is assembled to be at the same level as the substrate surface within a cavity in the substrate and electrical connections exposed to fluid flow in the flow channel; and
in Fig 1D the flow sensing die is partly overmoulded in such a way to protect electrical connections. The overmoulding used overlaps the substrate. This is an inefficient use of substrate area.

In US5404753**,** US8418549**,** US8695417**,** US9003877**,** US9091577 flow sensor assemblies have the bond pads far away from the sensing structure to allow enough space for a wall separating the flow channel from the bond wires cavity. This approach results in large die size and limitation for flow sensor assembly miniaturisation.

In US10107662B2**,** US20040118218A1**,** US20180172493A1**,** and US4548078**,** the flow sensing die is sitting into a cavity to have the flow sensing die surface flush with one of the flow channel's walls. The presence of such cavity is detrimental for the flow profile.

In EP1717562A1**,** standard moulding technologies for generic semiconductor packaging are used. However, moulding requires high tooling costs, and the tooling is specific to a design. If the design has to be changed, new tooling is required. Also, moulding technologies require a certain clearance between the edge of the mould and the edge of the flow sensing structure (e.g. membrane) on the flow sensing surface of the flow sensing die. This poses limitations in terms of sensing die miniaturisation and ultimately flow sensor assembly form factor. Furthermore, the mould might bleed onto the flow sensing structure leading to device rejection at inspection stage. Thus, precautions have to be taken (e.g. tight control of the moulding process, tranches or walls on the die surface) to minimise the rejection rate. Precautions often come with additional process steps and associated risk and cost. Similar considerations apply to US20160161314A1**.**

### Summary

Aspects and preferred features are set out in the accompanying claims.

According to a first aspect of the present disclosure there is provided a flow sensor assembly according to claim 1.

The flow sensor assembly provides a miniature fluid flow sensor assembly manufacturable in very high volumes at low unit cost, whereby the onset of turbulences is reduced in proximity to the flow sensing structure to increase the flow sensing performance while maintaining a miniaturised form factor.

The flow sensing channel may extend laterally through the device providing a fluid flow path laterally through the sensor assembly, past the flow sensor. The flow inlet channel, the flow outlet channel and the flow sensing channel together form the flow channel. The flow sensing channel may be defined as the whole length of the portion of the flow channel between the flow inlet channel and the flow outlet channel. In use, once flow has passed through the flow inlet it reaches the flow sensing channel which has a substantially flat surface. As a surface of the flow sensing channel is substantially flat, the fluid flow through the flow sensing channel flows parallel to the surface of the flow sensing channel and hits no or a reduced number of disturbances such as corners of the flow sensor (flow sensing die) within the flow sensing channel. The disclosed device therefore reduces turbulence through the sensor assembly, in particular around a flow sensing surface of the flow sensor, and improves the functionality of the flow sensor assembly.

Disturbances such as the corners of the flow sensor may be present within the flow sensor but outside the flow sensing channel, and therefore do not increase turbulence in the flow sensing channel.

The surface of the flow sensing channel that is flat may be a first surface closest to the first substrate and defined by the flow sensor. The surface that is substantially flat may include the surface of the flow sensor and a region of the flow sensing channel surface around the flow surface. Therefore the surface of the flow sensor may be flush or level with the surface of the region around the flow sensor.

Alternatively, the surface that is substantially flat may be a second surface furthest from the first substrate and defined by the lid. Both the first and second surfaces of the flow sensing channel may be substantially flat to reduce turbulence.

The flow sensor assembly may further comprise one or more extension members laterally adjacent to the flow sensor. The extension members may be one or more separate components in physical contact with the flow sensor or may be one or more extended portions of the flow sensor itself.

The fluid flow sensor assembly may comprise the following elements: (i) a flow sensing die (or flow sensor) comprising a flow sensing surface comprising a flow sensing structure; (ii) a substrate; (iii) a lid; (iv) a flow inlet (or flow inlet channel); (v) a flow outlet (or flow outlet channel); (vi) means to reduce turbulences in proximity of the flow sensing surface of the flow sensing die; and (vii) a flow channel guiding the fluid from the flow inlet to the flow outlet. The flow channel results from the assembly of the elements (i) to (vi).

One or more of the flow inlet channel, the flow outlet channel, or the flow sensing channel may comprise one or more channel restrictors. The channel restrictors may be formed at any location within the flow channel. The term 'channel restrictors' is used to refer to restrictors located within the flow channel.

The flow sensing channel guiding the fluid from the inlet to the outlet results from the assembly of the lid on top of the substrate. The bottom face (or first surface) of the flow sensing channel may be formed by the extension member (which can be a filler material) and the flow sensing surface of the flow sensing die. Bond wires may be perpendicular to the fluid flow and positioned in such a way to reduce their interaction with the fluid flow and thus reduce the onset of unwanted turbulences.

The flow channel may have any cross-sectional geometry (e.g. square, rectangular, semi-circular, irregular etc.). **The** cross-section geometry may also vary along the length of the flow channel (e.g. the cross-section of the flow channel may be circular at the inlet and square at the flow sensing die section of the flow sensing channel).

A specific case of non-uniform flow channel cross-sectional area is using restrictors (i.e. the flow channel cross-sectional area is locally reduced). Restrictors may be placed at the flow inlet and flow outlet to reduce the effect on the flow sensing performance of the flow sensor assembly when integrated into the system using it. Restrictors may also be placed along the flow sensing channel in proximity of the flow sensing surface of the flow sensing die to locally increase the flow speed and thus improve the flow sensing performance.

Another specific case of non-uniform flow channel cross-sectional area is using reservoirs or plenums (i.e. the flow channel cross-sectional area is locally enlarged). Reservoirs may also be placed at the flow inlet and flow outlet or along the flow sensing channel. By using plenums, at the point at which the flow inlet and/or flow outlet meet the flow sensing channel, there is a region within the flow inlet and/or flow outlet channel that has a much larger cross-sectional area than the remaining portion of the flow inlet/outlet channel. Plenums may be placed at either the flow inlet or flow outlet or both.

Also, the flow sensing channel may run straight from the inlet to the outlet, may have a serpentine shape from the inlet to the outlet or may have any other shape engineered to improve flow sensor assembly performance.

The extension member may comprise a filler material adjacent to the flow sensor and on the first substrate. The filler material or gel may extend across a remaining width of the flow sensing channel where the flow sensor is not present, and may have a substantially flat top surface across the width of the flow sensing channel. The filler material may extend to substantially the same height above the first substrate as the flow sensor height above the first substrate such that the flow sensor and the filler material together form a flat surface (the first surface of the flow sensing channel) across the entire length of the flow sensing channel. In other words the surface of the filler material may be flush with the surface of the flow sensor to form one flat surface throughout the entire length of the flow sensing channel.

The flow sensor assembly may further comprise a rim to retain the filler material. The rim may be an integral part of the first substrate, the lid, or may be a separate component of the flow sensor assembly.

The substrate may comprise a rim; and the rim may be integral part of the substrate. Alternatively, the rim may be an integral part of the lid or an additional element assembled onto the substrate as part of the flow sensor assembly process. As a result, a cavity between the rim and the flow sensing die is formed. To reduce turbulences in proximity to the flow sensing surface of the flow sensing die the cavity may be filled with a filler material. Depending on the filler deposition method, the surface topology of the filler may be concave or convex. Interestingly the filler material also protects the substrate bond pads and offers partial protection to the bond wires.

The shape of the rim may have sloping, vertical or backward sloping side walls, as long as the cavity within the rim contains the flow sensing die. The rim may circumnavigate the package and may be done so using any shape (e.g. circular, square, oval, square with rounded edges).

The filler material may be any material (e.g. a polymer, more specifically a gel, a resin, an epoxy, a ceramic, a metal, a semiconductor, or a combination of those) with suitable electrical, thermal, mechanical and chemical properties. The filler material is electrically insulating, thermally conductive, thermo-mechanically stable (i.e. does not expand or contracts in time and/or when exposed to varying temperatures), chemically stable (i.e. does not absorb, adsorb, desorb molecules in time). The filler material may be deposited (e.g. printed, syringe dispensed, sprayed, etc.) in ways compatible with the other elements forming the flow sensing assembly with high reproducibility. A curing step may be used to change the phase of the filler from fluid to solid.

The filler material may be configured such that it does not overlap an upper surface of the flow sensor. The filler material may have a concave or convex meniscus due to surface tension.

Alternatively, the filler material may slightly overlap the flow sensor when the flow sensor is heated up when in use. This may be achieved using a filler material with a concave or convex meniscus. Although the filler material may be configured to reduce the overlap between the filler material and the flow sensor in this case.

The flow sensor assembly may comprise bond wires electrically connected to the flow sensor, and the filler material may be configured to cover the bond wires. The filler material may fully encapsulate the bond wires; this reduces turbulence due to the bond wires. Alternatively, the filler material may partly encapsulate the bond wires and the bond wires may be configured to have reduced interaction with the fluid flow through the fluid flow sensor assembly.

Due to surface tension effects, the filler material may fully encapsulate the bond wires and the die bond PADs for extra protection.

The extension member may comprise an extension portion of the flow sensor. The extension portion may be an integral part of the flow sensor. The extension portion can be a region of a substrate and a dielectric layer, or could be other form of extension portion of a different type of flow sensor without a substrate and a dielectric layer.

The lid may define one or more apertures, and the flow inlet channel may comprise a channel through one of the apertures. The flow inlet channel may be configured to be substantially perpendicular to the flow sensing channel, and the extension member may extend underneath the flow inlet channel. The extension member may extend along the entire width of the inlet channel. These features allow fluid flow from the flow inlet channel to flow onto a substantially flat surface without disturbances when reaching the flow sensing channel.

Alternatively or additionally the flow outlet channel may comprise a channel through one of the apertures. The flow outlet channel may be configured to be substantially perpendicular to the flow sensing channel, and the extension member may extend underneath the flow outlet channel.

A top surface of the lid may be substantially flat such that the flow inlet channel and the flow outlet channel terminate on the top surface of the lid. The top surface may be defined as the exterior surface of the lid that extends in a lateral direction, substantially parallel to the flow sensing channel. The apertures or openings defining the flow inlet channel and the flow outlet channel may be flat.

Alternatively, the lid may comprise one or more protrusions on an outer surface of the lid, and the one or more apertures may extend through one or more of the protrusions. The protrusions may comprise hoses. The protrusions may extend away from the flow sensing channel.

The protrusions may be substantially perpendicular to the flow sensing channel, and the flow inlet channel and flow outlet channel may then be substantially perpendicular to the sensing channel. In this embodiment, fluid enters and exits the flow sensor in opposite directions.

Alternatively, the protrusions may be substantially parallel to the sensing channel, and the flow inlet channel and flow outlet channel may then be substantially parallel to the sensing channel. In this embodiment, fluid enters and exits the flow sensor in the same direction.

The flow sensor assembly may comprise a lid with a flow inlet and a flow outlet both comprising hoses to facilitate mechanical connection to the system using it. Hoses may have any geometry used to facilitate mechanical connection to the system using the flow sensor assembly. For instance, the hoses may have barbs, grooves, protrusions or a combination of those to enhance friction with the pipes or any other mean connected to them. The number, size and position within the flow sensor assembly of the inlet and the outlet might vary depending on the application requirements.

The first substrate and the lid may cooperate to define the flow inlet channel and the flow outlet channel. In other words, the flow inlet channel and the flow outlet channel may be defined by the cooperation of the shapes of the first substrate and the lid, and/or defined as a region between the first substrate and the lid either side of the flow sensing channel.

The flow inlet channel and the flow outlet channel may be defined on opposite surfaces of the flow sensor. In other words the flow inlet channel and flow outlet channel may be on opposite sides of the flow sensor such that fluid travels in one direction through the sensor. Fluid enters in same direction as it leaves, and therefore the sensor can be used in a continuous flow.

The lid further may comprise a lid restrictor, and the extension member may extend under the whole length of the lid restrictor. The term 'lid restrictor' is used to refer to a restrictor formed on the lid. The lid restrictor may be located on a lower surface of the lid. The lower surface of the lid may be defined as the surface of the lid that defines the flow sensing channel and is on the interior of the flow sensor assembly.

The lid may comprise a restrictor, placed along the flow channel in proximity of the flow-sensing surface of the flow-sensing die to locally increase the flow speed and thus improve the flow sensing performance. This may be used in applications where the flow sensor assembly is soldered on a surface over which a fluid is flowing, and the application requires measuring a property of the flowing fluid. This may be used in embodiment with a rim and filler material, or in embodiments where the extension member is an extended portion of the flow sensor.

The flow sensor assembly may further comprise an integrated circuit or circuitry located between the flow sensor and the first substrate. In other words, the first substrate, the integrated circuit, and the flow sensor may be formed in a stack in the order of first substrate, integrated circuit and flow sensor. In embodiments with filler material, the filler material may encapsulate the integrated circuit.

The flow sensor assembly may further comprise an integrated circuit or circuitry located laterally spaced from the flow sensor and over the first substrate, wherein the one or more extension members covers the integrated circuitry. In other words, the flow sensor and the integrated circuitry may be located side-by-side on the first substrate. The extension member may fully cover the integrated circuitry. In embodiments with filler material, the filler material may encapsulate the integrated circuit.

The flow sensor assembly may also comprises an integrated circuit (IC) die. The flow-sensing die may be stacked on top of the IC die to reduce the overall flow sensor assembly form factor. Alternatively, the flow sensing die and the IC die may be assembled side-by-side. In both cases, the filler material may offer protection to the IC die. The flow sensing die may be connected to the IC die directly through bond wires or indirectly through electrical connections through the substrate. The flow sensing die may have through silicon vias (TSV), to avoid the presence of bond wires and even further reduce the onset of unwanted turbulences. Advantageously, a flow sensor with TSV can help with 3D stacking techniques, whereby the flow sensing die sits on top of an IC (e.g. ASIC), thus reducing the sensor system size.

Alternatively or additionally, circuital blocks may be integrated on to the flow sensor itself. The membrane of the flow sensor may occupy a small area of the flow sensing surface, leaving a lot of area for monolithic integration of circuital blocks within the flow sensing die. Circuitry may comprise IPTAT, VPTAT, amplifiers, analogue to digital converters, digital to analogue converters, memories, RF communication circuits, timing blocks, filters or any other means for driving, readout, and electrical signals manipulation and communication to the outside world. For instance, in case of a thermal flow sensor, a heating element driven in constant temperature mode results in enhanced performance and having on-chip means to implement this driving method would result in a significant advancement of the state-of-the-art flow sensors. Also the driving method known a 3ω may be implemented via on-chip means, or any other driving method, such as constant temperature difference and time of flight, needed to achieve specific performance (e.g. power dissipation, sensitivity, dynamic response, range, fluid property detection, etc.).

The flow sensor may comprise: a sensor substrate comprising an etched portion; a dielectric layer located on the sensor substrate, wherein the dielectric layer may comprise at least one dielectric membrane located over the etched portion of the sensor substrate; and a sensing element located on or within the dielectric membrane.

The sensing element may comprise a metal layer located within the dielectric membrane. The metal layer may comprise a heater, a temperature sensor or other type of sensing element used in a flow sensor.

The flow sensing die or flow sensor may comprise: a substrate comprising an etched portion; a dielectric region located on the substrate, wherein the dielectric region comprises a dielectric membrane over an area of the etched portion of the substrate; and means to sense one or more properties of the fluid (e.g. velocity, flow rate, exerted wall shear stress, absolute pressure, differential pressure, temperature, direction, thermal conductivity, diffusion coefficient, density, specific heat, kinematic viscosity, etc.). The flow sensing die may be a thermal flow sensor, and said means to sense one or more properties of the fluid may include heating elements and temperature sensors. The flow sensing die may be a mechanical flow sensor, and said means to sense one or more properties of the fluid may include piezo elements.

The starting substrate may be silicon, or silicon on insulator (SOI). However, any other substrate combining silicon with another semiconducting material compatible with state-of-the-art CMOS fabrication processes may be used. Employment of CMOS fabrication processes guarantees sensor manufacturability in high volume, low cost, high reproducibility and wide availability of foundries supporting the process. CMOS processes also enable on-chip circuitry for sensor performance enhancement and system integration facilitation.

The membrane or membranes may be formed by back-etching using Deep Reactive Ion Etching (DRIE) of the substrate, which results in vertical sidewalls and thus enabling a reduction in sensor size and costs. However, the back-etching may also be done by using anisotropic etching such as KOH (Potassium Hydroxide) or TMAH (TetraMethyl Ammonium Hydroxide) which results in sloping sidewalls. The membrane may also be formed by a front-side etch or a combination of a front-side and back-side etch to result in a suspended membrane structure, supported only by 2 or more beams. The membrane may be circular, rectangular, or rectangular shaped with rounded corners to reduce the stresses in the corners, but other shapes are possible as well.

The dielectric membrane may comprise of silicon dioxide and/or silicon nitride. The membrane may also comprise of one or more layers of spin on glass, and a passivation layer over the one or more dielectric layers. The employment of materials with low thermal conductivity (e.g. dielectrics) enables a significant reduction in power dissipation as well as an increase in the temperature gradients within the membrane with direct benefits in terms of sensor performance (e.g. sensitivity, frequency response, range, etc.).

The membrane may also have other structures made of polysilicon, single crystal silicon or metal. These structures may be embedded within the membrane, or may be above or below the membrane. More generally these structures can be also outside the membrane and/or bridging between inside and outside the membrane. Main purposes of said structures are: (i) to engineer the thermo-mechanical properties (e.g. stiffness, temperature profile distribution, etc.) of the membrane; (ii) to engineer the fluid dynamic interaction between the fluid and the membrane; (iii) to protect the membrane from undesired surface bleeding of the filler material. The structures can have any geometry, be made of any material suitable for the purposes (i) to (iii), and realised as part of the die manufacturing process or as part of the flow sensor assembly process.

The dielectric region may comprise a dielectric layer or a plurality of layers including at least one dielectric layer. Generally speaking, a dielectric membrane region may be located immediately adjacent to the etched portion of the substrate. The dielectric membrane region corresponds to the area of the dielectric region above (or below depending upon the configuration) the etched cavity portion of the substrate. For example, in a flip-chip configuration the dielectric membrane will be shown below the etched cavity portion of the substrate. Each dielectric membrane region may be over a single etched portion of the semiconductor substrate.

The flow sensor may comprise a passivation layer located on the dielectric layer.

A top surface of the passivation layer may be configured to be non-planar. The top surface of the passivation layer may be defined as the surface that is adjacent to the flow sensing channel or the flow sensing surface. The top surface of the passivation layer may comprise protrusions extending away from the dielectric layer. The protrusions may comprise walls or ridges. Stacks may be used within the dielectric layer to support the walls or ridges.

Walls may be present on the flow sensing surface of the flow sensing die. In case the filler material bleeds onto the flow sensing surface of the flow sensing die, the walls act as barrier for the filler material thus avoiding interaction of the filler material with the flow sensing structure of the flow sensing surface of the flow sensing die. The walls may be a by-product of a non-planarised fabrication process. For example, metal structures within a metal layer may be realised, resulting in a flow sensing surface with extrusions following the pattern of the metal structures within the metal layer. This effect may be further enhanced if metal structures are realised within different metal layers on top of each other.

A top surface of the passivation layer may comprises one or more grooves. The grooves, trenches or recesses may be etched portions of the passivation layer. These allow excess filler material to extend or bleed into the grooves, for example when the sensor assembly is heated in use. This reduces bleeding of the filler material over the membrane.

Grooves or recesses may present on the flow sensing surface of the flow sensing die. In case the filler material bleeds onto the flow sensing surface of the flow sensing die, the grooves act as an accumulation volume for the filler material. This avoids interaction of the filler material with the flow sensing structure of the flow sensing surface of the flow sensing die.

The protrusions of the passivation layer may be used as an alternative or in addition to the grooves within the passivation layer. This reduces bleeding of the filler material onto the dielectric membrane, which would reduce functionality of the flow sensor.

The dielectric membrane may define a through-hole. The through hole or aperture may extend through the membrane to allow fluid to flow through the flow sensor.

To facilitate the assembly process and reduce failures during soldering of the flow sensor assembly, the membrane may comprise through holes (or membrane cavity vent holes). The vent holes reduce any pressure increase within the membrane cavity that may result in membrane breakages, damage or stress.

The first substrate may define an aperture. The aperture of the first substrate and the through-hole of the dielectric membrane may form a hole through the flow sensor assembly.

The first substrate may have a vent hole or aperture. The vent hole reduces any pressure build up in the cavity underneath the membrane, thus reducing the risk of failure during packaging of the flow sensing die onto the substrate and during soldering of the flow sensor assembly onto a second substrate (e.g. a PCB).

One or more of the flow inlet channel, the flow outlet channel, and the flow sensing channel may comprise a protective layer. The protective layer may be a protective coating. The protective coating may be used on all flow channels, or only a top surface of the extension member forming the flow sensing channel, or may be formed on the whole flow sensor assembly. In embodiments where the first substrate has an aperture, the aperture may be coated with the protective coating.

The flow sensor assembly may further comprise bond pads located on an outer surface of the flow sensor assembly. The first substrate may comprise additional bond pads, referred to as internal bond pads. The flow sensor may comprise additional bond pads, referred to as die bond pads. The outer surface of the flow sensor assembly may be plastic, and the (outer) bond pads may be made of metal. The outer bond pads may form an electrical connection between the outer surface of the assembly and the internal bond pads of the lead frame (first substrate). The internal bond pads may form an electrical connection to the die bond pads through bond wires. In embodiments with a protective coating, the bond pads may be exposed and not covered with a protective coating.

The flow channel walls may be partly or fully covered and protected by a protective layer. The protective layer may be a conformal layer, thus following the topology of the flow channel walls. The bond wires may also be conformally coated by the protective layer. Anything else within the flow channel that in absence of the protective layer would be in contact with the fluid flow may also be conformally coated by the protective layer.

The entire flow sensor assembly (not only the flow channel walls) may be coated by the conformal protective layer.

Alternatively, the protective layer may be deposited at wafer level. In this case, only the flow sensing die would be protected by the protective layer.

The protective layer may also be deposited during or at the end of the assembly process. In these cases, only part of the flow sensor assembly or the entire flow sensor assembly would be protected by the protective layer.

The protective layer may protect fragile elements of the flow sensor assembly from aggressive media (e.g. aggressive liquids, corrosive gases, etc.) and also improve biocompatibility of the flow sensor assembly for example in medical applications and generally avoid direct interaction of some or all the elements forming the flow sensor assembly with the fluid under test and/or the environment.

According to a further aspect of the present disclosure, there is provided a method of manufacturing a flow sensor assembly according to claim 12.

The method of manufacturing a flow sensor assembly may comprise: forming a substrate, forming a lid, assembly the flow sensing die on the substrate in such a way to minimise turbulences in proximity of the flow sensing surface of the flow sensing die, and assembly the lid.

According to the invention, the method comprises forming one or more guide structures, wherein the guide structures are incorporated into the lid and extend partially down towards the flow sensor so as to partially separate the flow sensing channel from one or more regions between the inlet channel and outlet channel outside the flow sensing channel.

The guide structure may be designed such that it separates the flow channel into one or more extra flow channels, with a main channel (the flow sensing channel) above the centre of the flow sensor, and one or more side channels around the flow sensor.

The one or more guide structures may comprise one or more protrusions on an inner surface of the lid. The guide structures may be incorporated into or formed on a roof of the flow channel, that is provided by the lid. When incorporated into the lid, the guide structures may or may not extend down and contact the flow sensing die surface, forming a sealed channel.

According to the invention, the guide structures extend partially down towards the flow sensor so as to partially separate the flow sensing channel from one or more regions between the inlet channel and outlet channel outside the flow sensing channel.

The one or more guide structures may comprise one or more protrusions on a surface of the flow sensor. The one or more guides may be formed on an extension member laterally adjacent to the flow sensor. According to come examples not part of the claimed invention, the guide structures may be incorporated into a bottom surface of the flow channel bottom, that is provided by the flow sensing die or extension members. The guide structures may be included on the die or extension members through micromachining methods (e.g. using SU8 material) or post-processed by way of bonding an additional patterned substrate. When the guide structures are incorporated into the flow sensing die, they may or may not extend until contacting the lid, forming a sealed channel.

The one or more guide structures may completely separate or isolate the flow sensing channel from the one or more regions or additional flow channels between the inlet channel and outlet channel outside the flow sensing channel. The guide structures may provide the restrictor in the flow channel.

The flow sensor assembly may comprise bond wires electrically connected to the flow sensor, and the guide structures may separate the bond wires from the flow sensing channel. The bond wires may be located in the one or more regions between the inlet channel and outlet channel outside the flow sensing channel.

The guide structures help to isolate vortices away from the flow sensing surface within the flow sensing channel, thus reducing the number of disturbances seen by the flow sensor. The disclosed device therefore reduces turbulence through the sensor assembly, thus improving linearity and sensitivity of the flow sensor assembly.

The flow sensing channel guiding the fluid from the inlet to the outlet results from the assembly of the lid on top of the substrate and guiding structures. The bond wires may also be outside the guide structures and outside the flow sensing channel, further reducing their interaction with the fluid flow.

The guiding structures may have any cross-sectional geometry (e.g. square, rectangular, filleted edges) and may extend from the flow inlet channel to the flow outlet channel.

The guide structures may be of non-uniform height along the flow channel.

The guide structure may have a lower height in regions closer to the flow inlet channel and flow outlet channel. The guide structure may have a greater height towards the centre of the flow sensor assembly and in regions closer to the flow sensor. In other words, the guide structures may extend further from the lid to the substrate or further across the depth of the sensor assembly, in the centre of the flow sensor assembly than underneath the inlet and outlet channels.

This non-uniform height (in particular the lower height closer to the flow inlet and outlet channels) results in vortices that are produced by the inlet being able to access the side (additional flow) channels, in which they are separated from the main flow or flow sensing channel.

The guide structure may have a greater height around the flow channel inlet. In other words, the guide structure may extend further from the lid to the substrate or further across the depth of the sensor assembly, underneath the flow inlet and outlet channels than in the centre of the flow sensor assembly. When formed in conjunction with a filler material this means the side channels are inaccessible, thus forcing all of the fluid flow over the flow sensing die and improving sensitivity and performance of the flow sensor. A flow channel bottom surface is formed by the combination of the flow sensing die and filler material, a flow channel top is formed from the lid and flow channel side walls are formed from the guide structures. The cross-sectional area of the flow channel has been reduced to increase flow velocity over the flow sensor. The side channels exist but are inaccessible by the fluid flow, and any bond wires within that area are protected from any corrosive substances in the fluid flow.

The lid may further comprise a lip or other protrusion on an outer surface of the lid. The lip may increase the size of the lid. The aim of such protrusions is to have increased landing zone for better connection as well as providing the ability to identify assembly orientation and pin marker. Such protrusions may be of any desired shape, for example leaving all 4 lid 'shoulders' available for easier connection and alignment.

The flow sensor assembly may further comprise a gasket, where an outside surface of the lid abuts (is in direct contact with) the gasket. The gasket may be located on the outside of the flow sensor lid around the flow inlet and flow outlet channel.

The gasket may be designed such that it creates a seal around and between the ports to ensure that the flow cannot leak out of the assembly fixture in addition to ensuring it cannot shortcut between the inlet channel and the outlet channel.

Any material can be used for the creation of the rubber gasket that provides suitable sealing properties under the desired operation ranges. For example, rubber (silicone, EPDM, Butyl rubber and SBR) or foam (EPDM, neoprene, polyethylene, polyurethane and vinyl nitride).

The gasket may be cut into any shape that best suits creating an air-tight seal. This includes changing the thickness for the correct compressive pressure and temperature as well as the external and internal cut sizes that should be appropriate for port size and connection into an external fixture.

In the specific case of small foam gaskets, a PET reinforcement film can be used in the centre of the gasket to aid the accurate cutting of the gasket shape.

The flow sensor assembly may further comprise an adhesive layer or adhesive tape between the gasket and the lid. The gasket may be adhered to either the flow sensor lid or to the fixture it is being placed in by a pressure sensitive tape (PSA). The tape may be made from any material to best suit the application including solid rubber and foam rubber which may or may not contain a reinforcement film layer.

### Brief Description of the Figures

Some embodiments of the disclosure will now be described by way of example only and with reference to the accompanying drawings, in which:
Fig. 1A shows a first flow sensor assembly according to the state-of-the-art;
Fig. 1B shows a second flow sensor assembly according to the state-of-the-art;
Fig. 1C shows a third flow sensor assembly according to the state-of-the-art;
Fig. 1D shows a fourth flow sensor assembly according to the state-of-the-art;
Fig. 2 shows a schematic top view of a flow sensor assembly;
Fig. 3A shows a schematic cross-section of a flow sensor assembly with filler material along the A-A' cut line in Fig. 2;
Fig. 3B shows a schematic cross-section of a flow sensor assembly with filler material along the B-B' cut line in Fig. 2;
Fig. 4 shows a schematic cross section of a flow sensor assembly with filler material having the inlet and outlet comprising a restrictor and the flow sensing die stack on top of the ASIC;
Fig. 5 shows a schematic cross section of a flow sensor assembly with filler material having the flow sensing die arranged side by side with the ASIC;
Fig. 6 shows a schematic cross section of a flow sensor assembly having the inlet and outlet on top of the flow sensing die;
Fig. 7 shows a schematic cross section of a flow sensor assembly with filler material having the inlet and outlet arranged parallel to the flow channel with a restrictor;
Fig. 8 shows a schematic cross section of a flow sensor assembly having the inlet and outlet arranged parallel to the flow channel with a restrictor;
Fig. 9 shows a schematic cross section of a flow sensor assembly with filler material protecting the bond wires;
Fig. 10 shows a schematic cross section of a flow sensing die having grooves on the flow sensing die surface;
Fig. 11 shows a schematic cross section of a flow sensing die having walls on the flow sensing die surface;
Fig. 12 shows a schematic top view of a flow sensing die having a structure (groove or wall) on the flow sensing die surface protecting the membrane from undesired surface bleeding of the filler material;
Fig. 13 shows a schematic cross section of a flow sensor assembly having the inlet and outlet on top of the flow sensing die and having a hole in the substrate underneath the membrane cavity;
Fig. 14 shows a schematic cross section of a flow sensor assembly with filler material having the inlet and outlet arranged parallel to the flow channel with a restrictor and having a protecting layer on the walls of the flow channel;
Fig. 15 shows a schematic cross section of a flow sensor assembly having the inlet and outlet on top of the flow sensing surface coated by a protective layer and having a hole in the substrate underneath the membrane cavity;
Fig. 16 shows a schematic cross section of a flow sensor assembly coated by a protective layer with only the soldering PADS left exposed;
Fig. 17 shows a schematic top view of a flow sensor assembly according to an embodiment of the disclosure, where the flow sensor assembly has guide structures;
Fig. 18a shows a schematic cross-section of the flow sensor assembly of Figure 17 across the cut-line B-B;
Fig. 18b shows a schematic cross-section of the flow sensor assembly of Figure 17 across the cut-line A-A;
Figures 18c and 18d show a comparison of Computational Fluid Dynamics (CFD) simulations of the flow sensor assembly without and with guiding structure;
Fig. 19a shows a schematic cross-section of the flow sensor assembly according to an embodiment of the disclosure where the guide structures have varying heights;
Fig. 19b shows a 3D drawing of the lid internal design of the embodiment of Figure 19a.
Figures 20a and 20b show schematic cross-sections of a flow sensor assembly according to an embodiment of the disclosure, in which a filler material is applied to create a planar surface;
Fig. 21a shows a schematic cross section of the flow sensor assembly according to an embodiment of the disclosure in which the lid comprises a lake or plenum, in which the flow can disperse;
Fig. 21b shows a 3D drawing of the lid internal design of the embodiment of Figure 21a;
Fig. 22a shows a schematic cross section of the flow sensor assembly according to an embodiment of the disclosure in which the guides next to the inlet and outlet are higher than in the centre of the sub-assembly above the flow sensing die;
Fig. 22b shows a 3D drawing of the lid internal design of the embodiment of Figure 22a.
Fig. 22c shows shows a schematic cross section according to the cut line C-C shown in Figure 22a;
Fig. 23a shows a schematic cross section of the flow sensor assembly according to an embodiment of the disclosure in which there is no filler material in the cavity between the flow sensing die and the substrate rim, providing a fluidic path around the base of the substrate for separating vortices from the main channel;
Fig. 23b shows a 3D drawing of the lid internal design of the embodiment of Figure 23a.
Fig. 24a shows a schematic cross section of a flow sensor assembly in which the guide structures are formed on the flow sensing die;
Fig. 24b shows a 3D drawing of the lid internal design of the embodiment of Figure 24a;.
Fig. 25a shows a schematic cross section of the flow sensor assembly according to an embodiment of the disclosure in which the lid has landing structures;
Fig. 25b shows a 3D drawing of the lid internal design of the embodiment of Figure 25a;
Fig. 26a shows a schematic cross-section of the flow sensor assembly according to an embodiment of the disclosure, in which the flow sensor assembly has landing structures formed on the flow sensing die;
Fig. 26b shows a 3D drawing of the cross-section of Figure 26a;
Figures 27a and 27b show schematic cross-sections of a flow sensor assembly according to an embodiment of the disclosure, where a flow sensing element is contained within the flow sensing channel and a temperature sensing element is located in the side channel, with the inclusion of flow controlling guides;
Fig. 28a shows a schematic cross section of a flow sensor assembly in which the guide structures contact the flow sensing surface;
Fig. 28b shows a 3D drawing of the lid internal design of the embodiment of Figure 28a;
Fig. 29 shows a 3D drawing of a flow sensor assembly, in which the sensor assembly has a gasket; and
Fig. 30 shows a 3D drawing of a flow sensor assembly, in which the sensor assembly has a gasket and adhering tape.

### Detailed Description of the Preferred Embodiments

Some examples of the disclosed device are given in the accompanying figures.

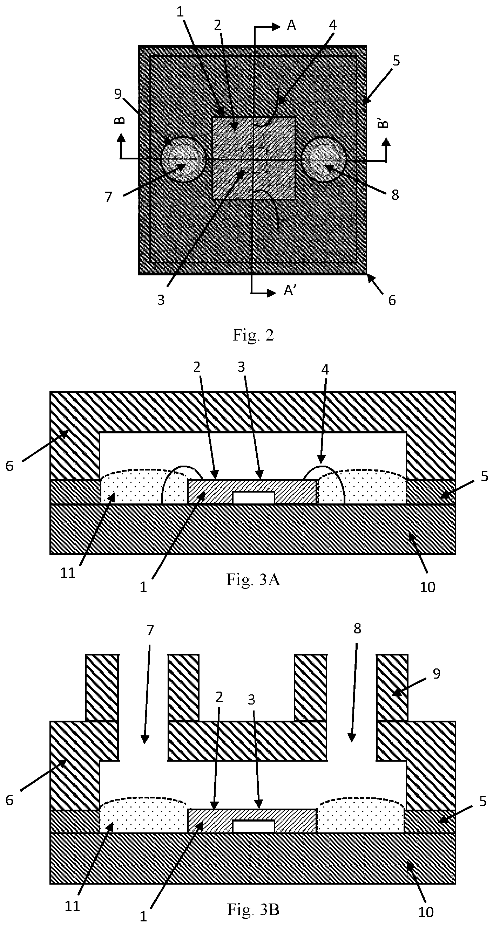

Figure 2 shows a schematic top view of a flow sensor assembly, comprising a flow sensing die or flow sensor 1, comprising a flow sensing surface **2,** comprising a membrane 3. The flow sensing die 1 is electrically connected to the substrate (first substrate) with bond wires 4. The substrate comprises a rim 5. The flow sensor assembly also comprises a lid **6,** comprising an inlet or flow inlet channel 7 and an outlet or flow outlet channel **8,** both comprising hoses 9.

Figure 3A shows a schematic cross section of the flow sensor assembly of Figure 2 along the cut line A-A' comprising a flow sensing die **1,** comprising a flow sensing surface **2,** comprising a membrane **3.** The flow sensing die **1** is electrically connected to the substrate **10** with bond wires **4.** The substrate **10** comprises a rim **5.** The gap between the rim **5** and the flow sensing die **1** is filled with a filler material 11 with a convex surface topology. The flow sensor assembly also comprises a lid **6.**

For connection, the flow sensor assembly has outer bond pads located on an outer surface of the flow sensor assembly. The substrate 10 also has bond pads, referred to as internal bond pads, and the flow sensor may comprise additional bond pads on the dielectric membrane, referred to as die bond pads. The outer bond pads form an electrical connection between the outer surface of the assembly and the internal bond pads of the substrate. The internal bond pads form an electrical connection to the die bond pads through the bond wires.

Figure 3B shows a schematic cross section of the flow sensor assembly of Figure 2 along the cut line B-B' comprising a flow sensing die **1,** comprising a flow sensing surface **2,** comprising a membrane **3.** The substrate **10** comprises a rim **5.** The gap between the rim **5** and the flow sensing die **1** is filled with a filler material **11** with a concave or convex surface topology. The flow sensor assembly also comprises a lid **6,** comprising an inlet **7** and an outlet **8,** both comprising hoses **9.**

In the embodiment shown in Figures 2, 3A, and 3B, the flow sensing die is assembled onto a substrate (e.g. a lead frame, a printed circuit board, or any other substrate mechanically supporting the die and offering an electrical connection from the die to the outside world). The substrate comprises a rim. The rim may be integral part of the substrate, integral part of the lid or an additional element assembled onto the substrate as part of the flow sensor assembly process. As a result, a cavity between the rim and the flow sensing die is formed. To reduce turbulences in proximity to the flow sensing surface of the flow sensing die the cavity is filled with a filler material. Depending on the filler deposition method, the surface topology of the filler may be concave or convex. The filler material also protects the substrate bond pads and offers partial protection to the bond wires.

The flow sensor assembly also has a lid with a flow inlet and a flow outlet both comprising hoses to facilitate mechanical connection to the system using it. Hoses may have any geometry that facilitate mechanical connection to the system using the flow sensor assembly. For instance, the hoses may have barbs, grooves, protrusions or a combination of those to enhance friction with the pipes or any other mean connected to them. The number, size and position within the flow sensor assembly of the inlet and the outlet might vary depending on the application requirements.

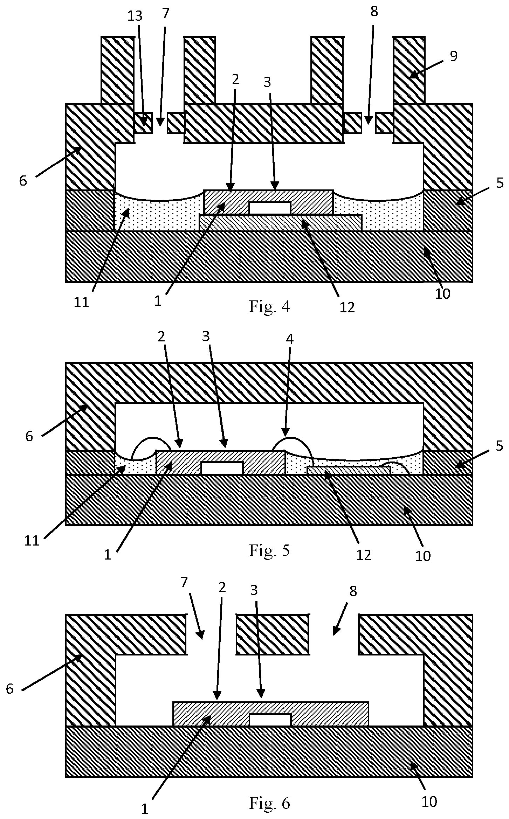

Figure 4 shows a schematic cross section of a flow sensor assembly, in which the inlet and outlet both have a restrictor and the flow sensing die is stacked on top of the ASIC. The flow sensor assembly comprises a flow sensing die **1,** comprising a flow sensing surface **2,** comprising a membrane **3.** The flow sensing die **1** is stack on top of an IC **12.** The substrate **10** comprises a rim **5.** The gap between the rim **5** and the flow sensing die **1** is filled with a filler material **11** with a concave surface topology. The flow sensor assembly also comprises a lid **6,** comprising an inlet **7** and an outlet **8,** both comprising hoses **9** and channel restrictors **13.**

A non-uniform flow channel cross-sectional area is achieved by the use of restrictors (i.e. the flow channel cross-sectional area is locally reduced). Restrictors are placed at the flow inlet and flow outlet to reduce the effect on the flow sensing performance of the flow sensor assembly when integrated into the system using it.

The protrusions or hoses are substantially perpendicular to the flow sensing channel, and the flow inlet channel and flow outlet channel may then be substantially perpendicular to the sensing channel. In this embodiment, fluid enters and exits the flow sensor in opposite directions.

The flow sensing die is stacked on top of the IC die to reduce the overall flow sensor assembly form factor. Alternatively, the flow sensing die and the IC die may be assembled side-by-side, as shown in Figure 3. In both cases, the filler material offers protection to the IC die.

Figure 5 shows a schematic cross section of a flow sensor assembly, in which the flow sensing die is located laterally adjacent to an ASIC. The flow sensor assembly comprises a flow sensing die **1,** comprising a flow sensing surface **2,** comprising a membrane **3.** The flow sensing die **1** is assembled side by side with an IC **12.** The flow sensing die **1** is electrically connected to the IC **12** with bond wires **4.** The IC is electrically connected to substrate **10.** The substrate **10** comprises a rim **5.** The gap between the rim **5** and the flow sensing die **1** is filled with a filler material **11** fully covering the IC **12.** The flow sensor assembly also comprises a lid **6.**

Figure 6 shows a schematic cross section of a flow sensor assembly, in which the inlet and outlet both terminate of a top surface of the lid. The inlet **7** and outlet **8** are both located over the flow sensor **1,** which has an integral extension portion to reduce turbulence. The flow sensor assembly comprises a flow sensing die **1,** comprising a flow sensing surface **2,** comprising a membrane **3.** The flow sensor assembly also comprises a lid **6,** comprising an inlet **7** and an outlet **8.** The flow sensing die **1** comprises a flow sensing surface **2** extending underneath the inlet **7** and the outlet **8.**

In Figures 3 to 6, the surface within or around the flow sensor may have a first region underneath the channel inlet 7, and a second region underneath the channel outlet 8, and the surface between the first and second region is substantially flat.

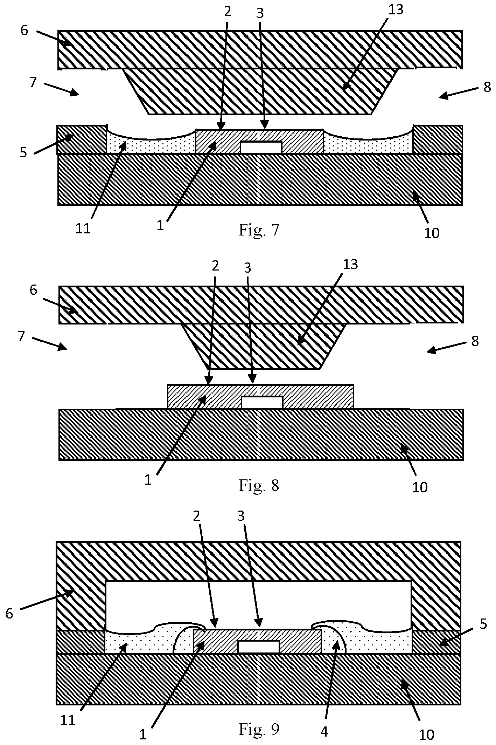

Figure 7 shows a schematic cross section of a flow sensor assembly, in which the inlet and outlet are arranged parallel to the flow sensing channel and the device has a lid restrictor. The flow sensor assembly comprises a flow sensing die **1,** comprising a flow sensing surface **2,** comprising a membrane **3.** The substrate **10** comprises a rim **5.** The gap between the rim **5** and the flow sensing die **1** is filled with a filler material **11.** The flow sensor assembly also comprises a lid **6,** comprising an inlet **7** and an outlet **8,** and a lid restrictor **13.**

In this embodiment, the flow sensor assembly comprises a flow sensing die, comprising a flow sensing surface, comprising a membrane. The flow sensor assembly also comprises a lid and a substrate with a rim. The flow sensing die is assembled on the substrate. As a result, a cavity between the rim and the flow sensing die is formed. To reduce turbulences in proximity of the flow sensing surface of the flow sensing die the cavity is filled with a filler material. The lid is assembled on the rim of the substrate.

The lid comprises a restrictor, placed along the flow channel in proximity of the flow sensing surface of the flow sensing die to locally increase the flow speed and thus improve the flow sensing performance. Upon assembly of the lid on the rim of the substrate a flow inlet, a flow outlet, and flow channel are created. The flow sensor assembly described in this embodiment is suitable in applications where the flow sensor assembly is soldered on a surface over which a fluid is flowing, and the application requires measuring a property of the flowing fluid.

Figure 8 shows a schematic cross section of a flow sensor assembly, in which the inlet and outlet arranged parallel to the flow channel, the device has a lid restrictor, and the flow sensor has an extension portion. The flow sensor assembly comprises a flow sensing die **1,** comprising a flow sensing surface **2,** comprising a membrane **3.** The flow sensor assembly also comprises a substrate **10,** a lid **6,** comprising an inlet **7** and an outlet **8,** and a restrictor **13.**

In this embodiment, the flow sensor assembly comprises a flow sensing die, comprising a flow sensing surface, comprising a membrane. The flow sensor assembly also comprises a lid and a substrate. The flow sensing die and the lid are assembled on the substrate. The lid comprises a restrictor, placed along the flow channel in proximity of the flow sensing surface of the flow sensing die to locally increase the flow speed and thus improve the flow sensing performance by reducing the turbulences in proximity of the membrane on the flow sensing surface of the flow sensing die. Upon assembly of the lid on the rim of the substrate a flow inlet, a flow outlet, and flow channel are created. The flow sensor assembly described in this embodiment is suitable in applications where the flow sensor assembly is soldered on a surface over which a fluid is flowing, and the application requires measuring a property of the flowing fluid.

In Figures 7 & 8, the flow channel surface around the flow sensor, and in the entire region below the restrictor 13 is substantially flat. The two ends of the restrictor 13 act as a guide for the fluid into the flow channel, and so are the input and output points of the flow channel, and the surface below them is substantially flat.

Figure 9 shows a schematic cross section of a flow sensor assembly, in which filler material encapsulates and protects the bond wires. The flow sensor assembly comprises a flow sensing die **1,** comprising a flow sensing surface **2,** comprising a membrane **3.** The flow sensing die **1** is electrically connected to the substrate **10** with bond wires **4.** The substrate **10** comprises a rim **5.** The gap between the rim **5** and the flow sensing die 1 is filled with a filler material **11** covering the bond wires **4.** The flow sensor assembly also comprises a lid **6.**

In this embodiment, the flow sensor assembly comprises a flow sensing die, comprising a flow sensing surface, comprising a membrane. The flow sensor assembly also comprises a lid and a substrate with a rim. The flow sensing die is assembled on the substrate. As a result, a cavity between the rim and the flow sensing die is formed. To reduce turbulences in proximity of the flow sensing surface of the flow sensing die the cavity is filled with a filler material. Due to surface tension effects, the filler material fully encapsulates the bond wires and the die bond PADs for extra protection. The lid is assembled on the rim of the substrate.

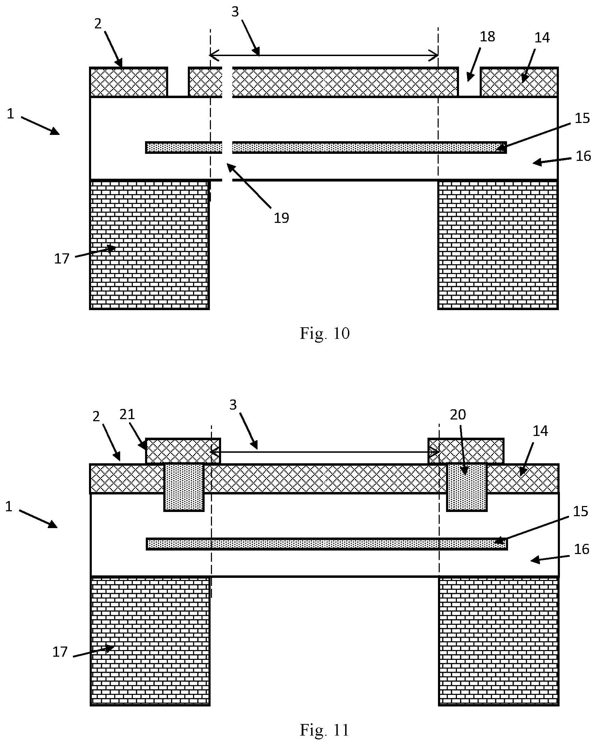

Figure 10 shows a schematic cross section of the flow sensing die 1 that can be used in a flow sensor assembly according to an embodiment of the disclosure, in which the flow sensor 1 has grooves on the flow sensing die surface. The flow sensor 1 comprises a flow sensing surface **2,** comprising a membrane 3. The flow sensing die **1** also comprises a passivation layer **14,** a metal layer **15** acting as a sensing element embedded within a dielectric layer **16** and a die substrate **17** partly etched through to realise the membrane 3. The passivation layer **14** is also partly etch through to realise grooves **18** on the flow sensing surface **2.** The membrane also comprises a through-hole **19.**

In this embodiment, grooves are present on the flow sensing surface of the flow sensing die. In case the filler material bleeds onto the flow sensing surface of the flow sensing die, the grooves act as an accumulation volume for the filler material. This avoids interaction of the filler material with the flow sensing structure of the flow sensing surface of the flow sensing die.

Figure 11 shows a schematic cross section of the flow sensing die **1** that can be used in a flow sensor assembly according to an embodiment of the disclosure, in which the flow sensor 1 has walls on the flow sensing die surface. The flow sensor 1 comprises a flow sensing surface **2,** comprising a membrane 3. The flow sensing die **1** also comprises a passivation layer **14,** a metal layer **15** embedded within a dielectric layer **16** and a die substrate **17** partly etched through to realise the membrane **3.** The passivation layer **14** is also made non-planar by mean of metal stacks **20** to realise walls **21** on the flow sensing surface **2.**

In this embodiment, walls are present on the flow sensing surface of the flow sensing die. In case the filler material bleeds onto the flow sensing surface of the flow sensing die, the walls act as barrier for the filler material thus avoiding interaction of the filler material with the flow sensing structure of the flow sensing surface of the flow sensing die. The walls may be a by-product of a non-planarised fabrication process. For example, metal structures within a metal layer may be realised, resulting in a flow sensing surface with extrusions following the pattern of the metal structures within the metal layer. This effect may be further enhanced if metal structures are realised within different metal layers on top of each other.

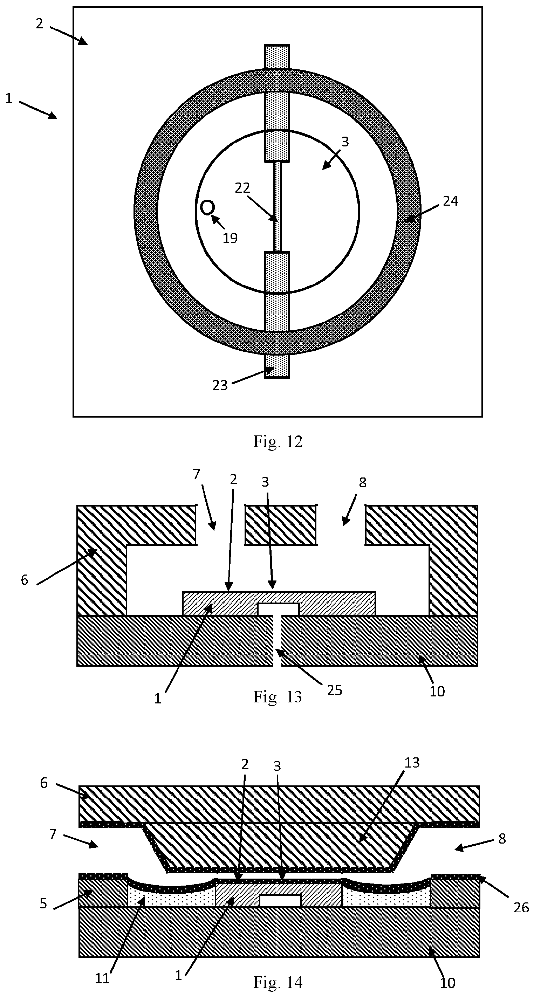

Figure 12 shows a schematic top view of the flow sensing die 1 that can be used in a flow sensor assembly according to an embodiment of the disclosure, in which the flow sensor 1 has a structure (groove or wall) on the flow sensing die surface protecting the membrane from undesired surface bleeding of the filler material. The flow sensor 1 comprises a flow sensing surface **2,** comprising a membrane **3.** A wire heater **22** is embedded within membrane **3** and has tracks **23** connected to PADS (not shown for simplicity). The membrane also comprises a through-hole **19.** The flow sensing die 1 also comprises a structure **24** (made of grooves, walls or a combination of those) to avoid filler material bleeding onto the membrane **3.**

Figure 13 shows a schematic cross section of a flow sensor assembly, in which the inlet and outlet are on top of the flow sensing die and the flow sensor assembly has a hole in the substrate underneath the membrane cavity. The flow sensor assembly comprises a flow sensing die **1,** comprising a flow sensing surface **2,** comprising a membrane 3. The flow sensor assembly also comprises a lid **6,** comprising an inlet **7** and an outlet 8. The flow sensing die **1** comprises a flow sensing surface **2** extending underneath the inlet **7** and the outlet **8.** The substrate **10** comprises a hole **25.**

In this embodiment, the substrate has a vent hole. The vent hole reduces pressure build up in the cavity underneath the membrane, thus reducing the risk of failure during packaging of the flow sensing die onto the substrate and during soldering of the flow sensor assembly onto a second substrate (e.g. a PCB).

Figure 14 shows a schematic cross section of a flow sensor assembly, in which the flow sensor assembly has a protecting layer on the walls of the flow channel. The flow sensor assembly comprises a flow sensing die **1,** comprising a flow sensing surface **2,** comprising a membrane **3.** The substrate **10** comprises a rim **5.** The gap between the rim **5** and the flow sensing die **1** is filled with a filler material **11.** The flow sensor assembly also comprises a lid **6,** comprising an inlet **7** and an outlet **8,** and a restrictor **13.** The flow channel, resulting from the assembly of the lid **6** with a restrictor **13** and the substrate rim **5** and the filler material **11** and the flow sensing surface **2,** is protected by the protective layer **26.**

The flow channel walls are partly or fully covered and protected by a protective layer. The protective layer is a conformal layer, thus following the topology of the flow channel walls. The bond wires may also be conformally coated by the protective layer. Anything else within the flow channel that in absence of the protective layer would be in contact with the fluid flow may also be conformally coated by the protective layer.

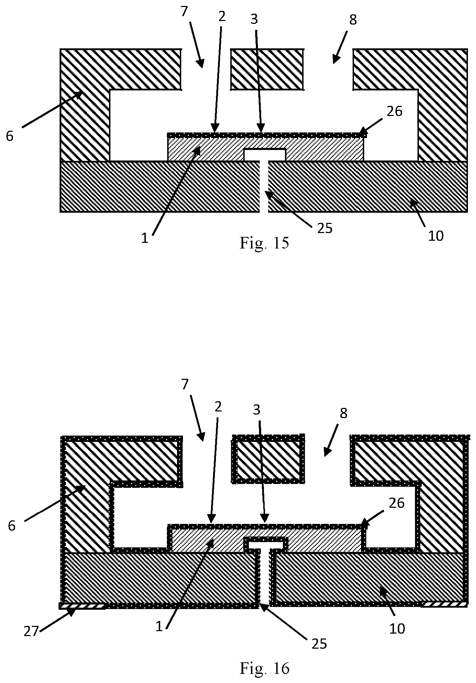

The protective layer of this embodiment and of the embodiments shown in Figures 15 and 16 protects fragile elements of the flow sensor assembly from aggressive media (e.g. aggressive liquids, corrosive gases, etc.). The protective layer also improves biocompatibility of the flow sensor assembly for example in medical applications and generally reduces direct interaction of some or all the elements forming the flow sensor assembly with the fluid under test and/or the environment.

Figure 15 shows a schematic cross section of a flow sensor assembly, in which the flow sensor assembly has the flow sensing surface coated by a protective layer. The flow sensor assembly comprises a flow sensing die **1,** comprising a flow sensing surface **2** with a protective layer **26,** comprising a membrane **3.** The flow sensor assembly also comprises a lid **6,** comprising an inlet **7** and an outlet **8.** The flow sensing die **1** comprises a flow sensing surface **2** extending underneath the inlet **7** and the outlet **8.** The substrate **10** comprises a hole **25.** In this embodiment, the protective layer may be deposited at wafer level. In this case, only the flow sensing die would be protected by the protective layer.

Figure 16 shows a schematic cross section of a flow sensor assembly, in which the entire flow sensor assembly is coated by a protective layer with only the soldering outer bond PADS left exposed. The flow sensor assembly comprises a flow sensing die **1,** comprising a flow sensing surface **2,** comprising a membrane **3.** The flow sensor assembly also comprises a lid **6,** comprising an inlet **7** and an outlet **8.** The flow sensing die **1** comprises a flow sensing surface **2** extending underneath the inlet **7** and the outlet **8.** The substrate **10** comprises a hole **25.** The flow sensor assembly also comprises a protective layer **26,** coating the entire assembly and leaving exposed only the PADS **27.**

In this embodiment, the entire flow sensor assembly (not only the flow channel walls) may be coated by the conformal protective layer.

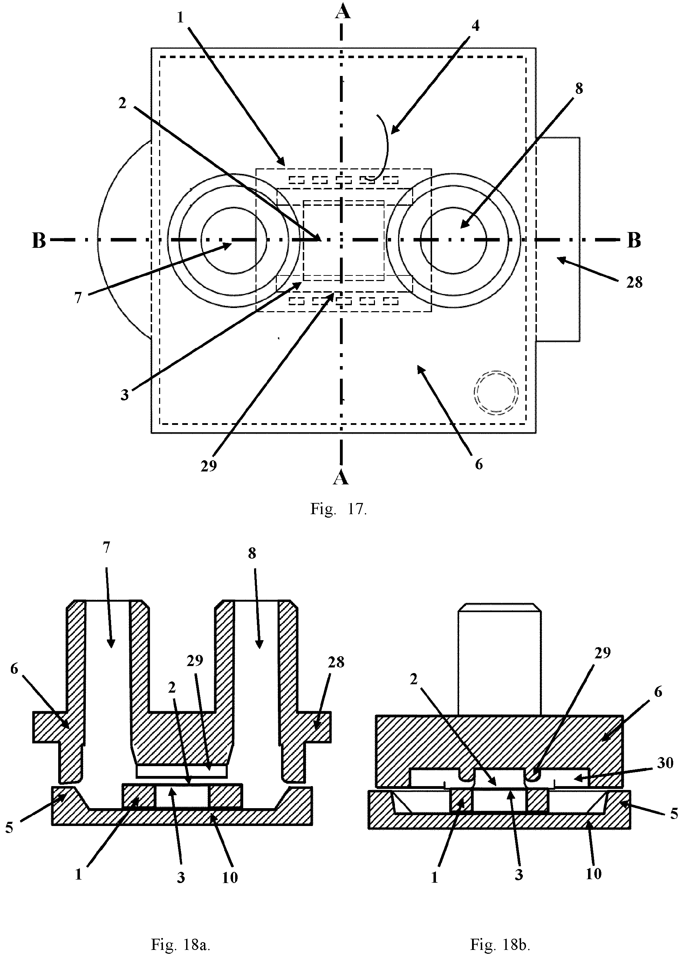

Figure 17 shows a schematic top view of a flow sensor assembly according to an embodiment of the disclosure. The flow sensor assembly has a flow sensing die or flow sensor **1,** having a flow sensing surface **2,** and a membrane **3.** The flow sensing die **1** is electrically connected to the substrate through wire bonds **4.** The substrate has a rim **5.** The flow sensor assembly also has a lid **6,** having an inlet channel **7** and an outlet channel **8.**

Figure 18a shows a schematic cross-section of the flow sensor assembly of Figure 17 along the cut line B-B. In this embodiment, the lid 6 has a lip **28** and inlet and outlet channels **7** & **8,** and guides **29.**

Figure 18b shows a cross-section schematic of the flow sensor assembly of Figure 17 along the cut line A-A.

The lip **28 of** the lid **6** increases the landing zone area on the surface of the lid to increase connection performance. The lip or lips **28** may be of any shape and location that enhances the mechanical connection of the assembly to a system.

In this example, there are two guide structures **29** located on the lid **6.** The guide structures **29** separate the flow channel into the flow sensing channel and two side channels **30.** The flow sensing channel extends above the centre of the flow sensor, and the side channels flow 30 flow between the inlet channel **7** and outlet channel **8,** outside the flow sensing channel. The guides **29** control and direct the flow through the package, which reduces turbulence within the flow sensing region. The guides may be of any size or shape that help to control or laminarise the flow within the package. The side channels **30** allow space for the wire bond connections, and confine any vortices that are created from the inlet channel **7** away from the flow sensing die **1.**

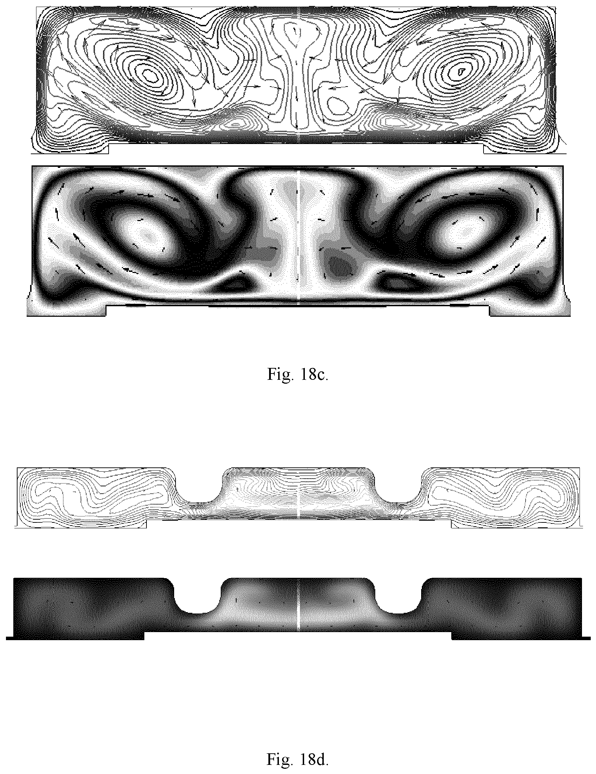

Figure 18c shows a Computational Fluid Dynamics (CFD) simulation of an example cross-section of an embodiment without guiding structures. Figure 18d shows a Computational Fluid Dynamics (CFD) simulation of an example cross-section as depicted in Figure 18b, where the device has guide structures. The simulation shows the relative magnitude of velocity as greyscale and has velocity direction superimposed as vectors. It can be seen that there is enhanced flow through the central channel and a significant decrease of vortices within the chamber in the embodiment with guide structures.

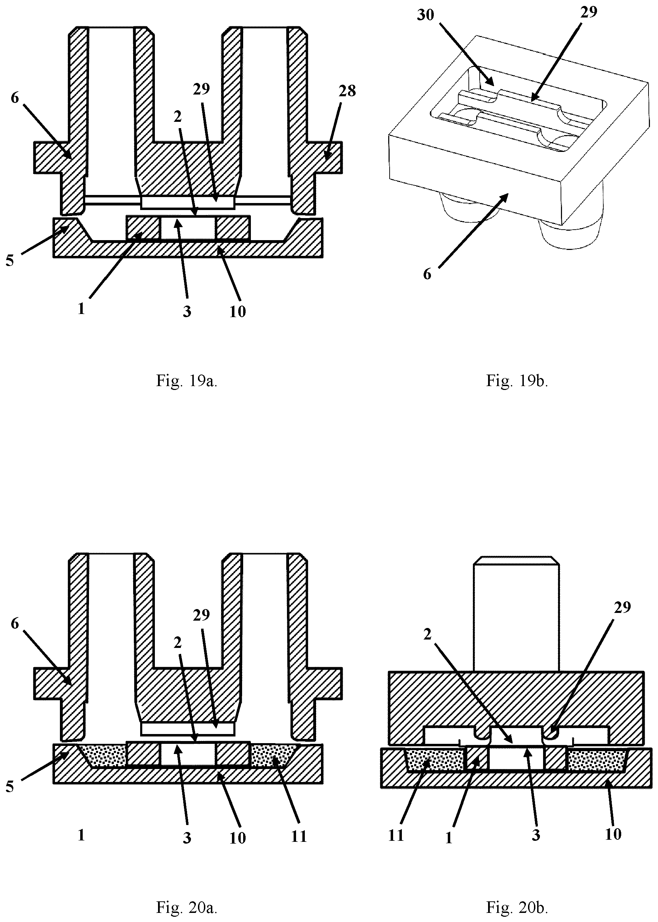

Figure 19a shows a schematic cross-section of the flow sensor assembly according to an embodiment of the disclosure where the guides **29** have varying heights. Figure 19b shows a 3D drawing of the lid internal design of the embodiment of Figure 19a. The flow sensing lid **6** has side channels **30** and flow controlling guides **29** that extend across the fluidic cavity and contain varying heights. The guides **29** have a lower height closer to the inlet **7** and outlet **8** channels, and a greater height towards the centre of the flow sensor assembly and above the flow sensor **1.** In other words, the guides **29** extend further from the lid **6** to the substrate **10,** in the centre of the flow sensor assembly than underneath the inlet **7** and outlet **8** channels.

During use, as fluid leaves the inlet channel **7,** vortices are created out of the inlet **7** due to its circular shape. The guides are of lower height next to the inlet **7,** allowing these vortices to access the side channel and be directed down the side channels **30.** The guides then become higher, and thus stop the interaction of these vortices in the flow sensing channel, helping to create laminar flow over the flow sensing die **1.**

Figures 20a and 20b show schematic cross sections of the flow sensor assembly according to an embodiment of the disclosure, in which the cavity between the flow sensing die **1** and rim **5** is filled with a filler material **11.** The flow sensor assembly has guides **29** similar to those of the flow sensor assembly of Figure 18. Depending on the filler deposition method, the surface topology of the filler may be flat, concave or convex. The filler material also protects the substrate bond pads and offers partial protection to the bond wires. The filler material creates a planar surface with the flow sensing surface and helps to reduce flow separation and discontinuities caused by the flow sensing die edge.

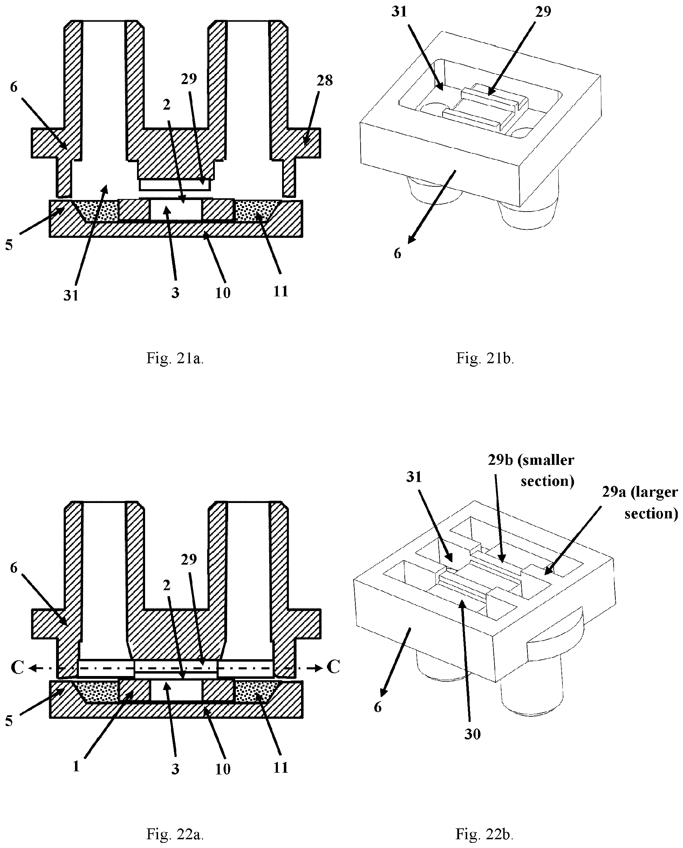

Figure 21a shows a schematic cross section of the flow sensor assembly according to an embodiment of the disclosure in which the lid comprises a plenum or reservoir **31,** in which the flow can disperse as well as comprising the guides **29** to protect the flow sensing die from turbulence. Figure 21b shows a 3D drawing of the lid internal design of the embodiment of Figure 21a. The flow sensor assembly comprises a flow sensing die **1,** comprising a flow sensing surface **2,** comprising a membrane **3.** The flow sensing lid **6** comprises flow controlling guides **29** as well as a plenum **31.**

The plenum **31** is a region of space next to or below the inlet **7** and outlet **8** channels, in which fluid flowing through the device can disperse. By use of the plenum **31** in conjunction with the guides **29,** the system flow can be controlled. The plenum **31** diffuses fluidic energy and the guides **29** protect the flow sensing element from vortices and turbulence created from the fluid exiting the inlet.

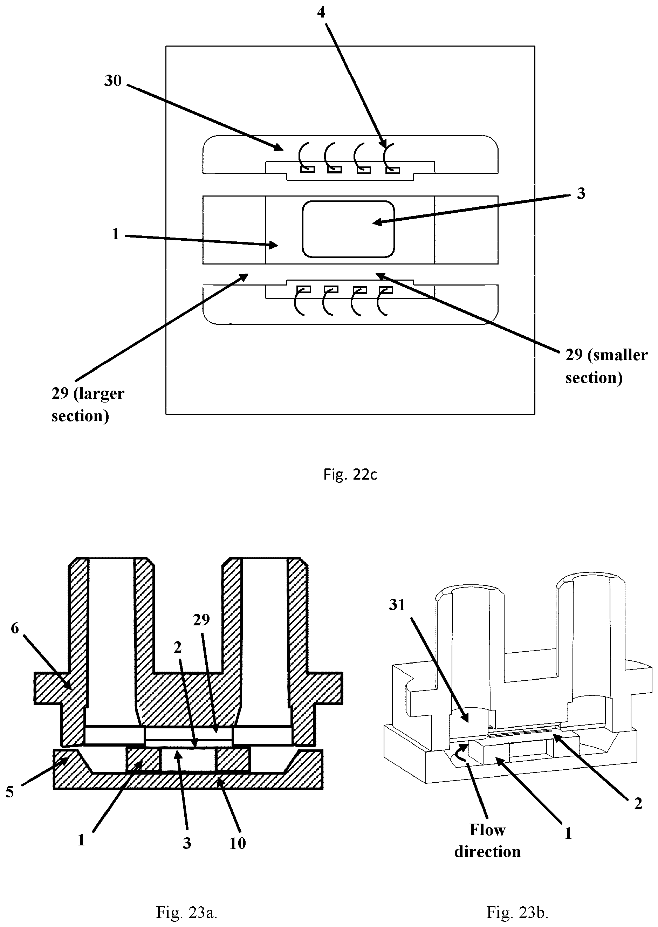

Figure 22a shows a schematic cross section of the flow sensor assembly according to an embodiment of the disclosure in which the guides **29** next to the inlet **7** and outlet **8** are higher than in the centre of the sub-assembly above the flow sensing die **1.** Figure 22b shows a 3D drawing of the lid internal design of the embodiment of Figure 22a. There is a filler material **11** in the cavity between the flow sensing die **1** and the substrate rim **5.** The flow sensing lid **6** comprises flow controlling guides at varying height **29,** side channels **30** and a plenum **31.** Figure 22c shows a schematic cross section according to the cut line C-C shown in Figure 22a, this shows the use of the guiding structures **29** to protect the wire bonds.

In this embodiment, the guides **29a** next to the inlet **7** and outlet **8** are larger (higher and thicker) than the guides **29b** in the centre of the sub-assembly above the flow sensing die **1.** In other words, the guides **29** extend further from the lid **6** to the substrate **10,** underneath the inlet **7** and outlet **8** channels than in the centre of the flow sensor assembly. This means that the guides block more of the flow channel underneath the inlet **7** and outlet **8** channels, than above the flow sensing die **1.**

As the guides **29** next to the inlet **7** and outlet **8** are larger, this renders the side channels inaccessible for flow to go down, due to there being no space between the filler material **11** and the lid **6.** This embodiment creates a flow channel with smaller cross-sectional area, enhancing sensitivity of the device. As the wire bonds are outside the flow sensing channel, and in the side channels 30, this embodiment also ensures there is minimal fluidic contact with the wire bonds and wire bond pads by having no fluidic flow through the side channels. This enhances the lifetime of systems by minimising corrosive effects on the bond wires and bond wire pads.

Figure 23a shows a schematic cross section of the flow sensor assembly according to an embodiment of the disclosure in which there is no filler material in the cavity between the flow sensing die **1** and the substrate rim **5.** Figure 23b shows a 3D drawing of the lid internal design of the embodiment of Figure 23a. The flow sensing lid **6** comprises flow controlling guides at varying height **29** and a plenum **31.**

This embodiment is identical in geometry to the embodiment shown in Figure 22a and Figure 22b except that there is no filler material between the flow sensing die **1** and the substrate rim **5.** The absence of filler material creates an alternative path in which the side channels are accessible, allowing flow to leave the flow sensing channel under the guide structures **29** and flow around the sensing die **1.** In this embodiment, flow vortices can access the side channels around the flow sensing die 1 and in the cavity of the substrate **10** formed by the rim **5,** and are subsequently kept separate from the flow sensing surface via the guides **29,** promoting flow control and flow linearity. In this case, the rim **5** has sloping sides and circular shape. The rim **5** could alternatively have vertical walls.

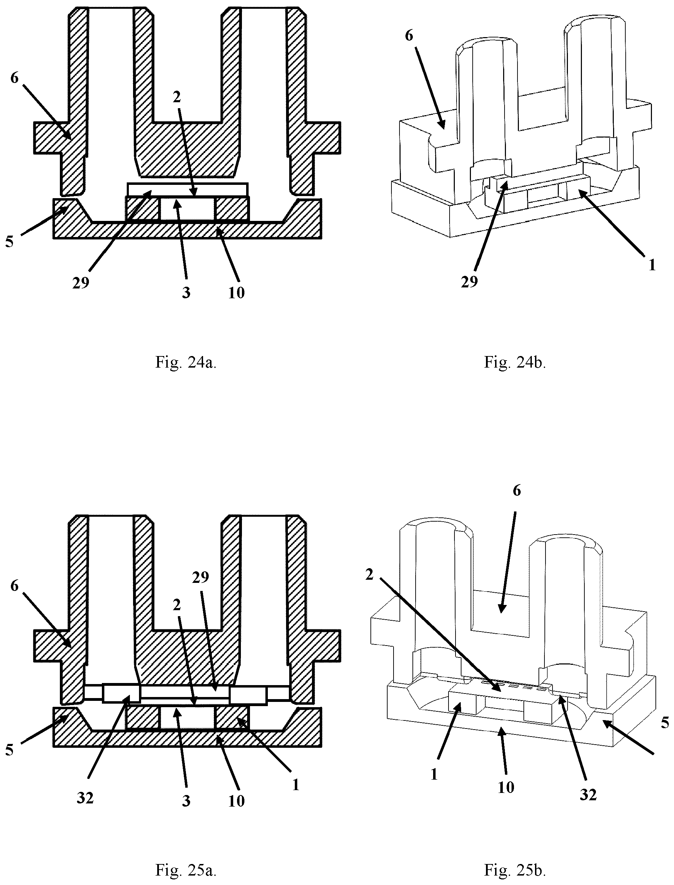

Figure 24a shows a schematic cross section of a flow sensor assembly in which the guide structures **29** are formed on the flow sensing die **1** as opposed to on the lid **6.** Figure 24b shows a 3D drawing of the lid internal design of the embodiment of Figure 24a..

In this embodiment the guide structures **29** are formed on the flow sensing die 1 as opposed to on the lid **6.** If the guide structures are located on the lid they will not touch the sensing die surface (flow channel surface) when assembled. However, when the guides are fabricated on the flow sensing die there will be no gap between the guides and the flow sensing surface. This gives the advantages of high tolerance guides and means that no gap will be present between the flow sensing surface and the guides, resulting in a well-controlled flow channel.

Figure 25a shows a schematic cross section of the flow sensor assembly according to an embodiment of the disclosure in which the lid **6** has landing structures **32** which extend down from the lid **6.** Figure 25b shows a 3D drawing of the lid internal design of the embodiment of Figure 25a. The flow sensing lid **6** comprises flow controlling guides at varying height **29** and landing structures **32** which extend down from the lid **6** and may come in contact with the flow sensing die **1** within the assembly.

In this embodiment, landing structures **32** are formed on the lid **6.** The landing structures **32** can be used to contact the flow sensing die **1** when the system is assembled, providing the benefit of a greater tolerance control of the flow sensing channel height, directly leading to better repeatability. In addition to this, the landing structures provide a minimum height (when contacted) for the wire bond loop heights, resulting in a system where the lid **6** cannot interfere with the wire bonds.

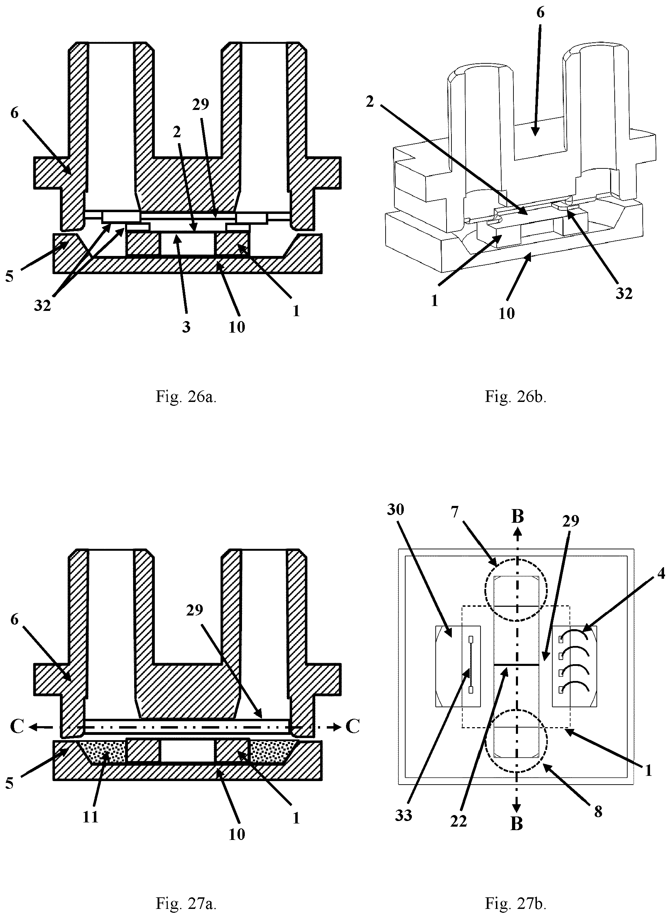

Figure 26a shows a schematic cross-section of the flow sensor assembly according to an embodiment of the disclosure, in which the flow sensor assembly has landing structures **32** formed on both the lid **6** and the flow sensing die **1.** Figure 26b shows a 3D representation of figure 26a.

This embodiment is similar to that shown in Figures 25a and 25b, however in this embodiment the flow sensing die **1** has additional landing structures **32** on the side adjacent to the lid **6** that act as landing structures. In Figure 26a, the two landing structures 32 are located on either side of the flow channel as can be seen in the 3D representation of Figure 26b. Such structures may come into contact with the lid **6** within the assembly or come into contact with landing structures **32** also placed on the lid **6.** Such structures will allow more precise control of the tolerance of the channel height, and help to avoid assembly breakages.

Figure 27a shows a schematic cross-section (cut-line B-B) of a flow sensor assembly according to an embodiment of the disclosure, in which an additional temperature sensing element is located outside the flow controlling guide structure. Figure 27b shows a cross-section along the cut-line C-C as depicted in Figure 27a. The flow sensor assembly comprises a flow sensing die **1,** comprising a flow sensing element **22** and a temperature sensing element **33,** a flow sensing surface **2,** comprising a membrane 3 . The flow sensing lid **6** comprises flow controlling guides **29.** The cavity between the flow sensing die **1** and rim **5** is filled with a filler material **11.** The flow sensor assembly also comprises side channels **30.**

The flow sensing element of the flow sensing die **1** is contained within the flow sensing channel, between the two flow controlling guide structures **29.** However, the additional temperature sensing element **33** is located outside the flow controlling guide structure and not within the flow sensing channel. In this embodiment, the filler material **11** renders the side channels inaccessible, and thus means that no flow enters the side channels **30.** This results in the reference temperature measuring true ambient temperature and being less effected by flow.

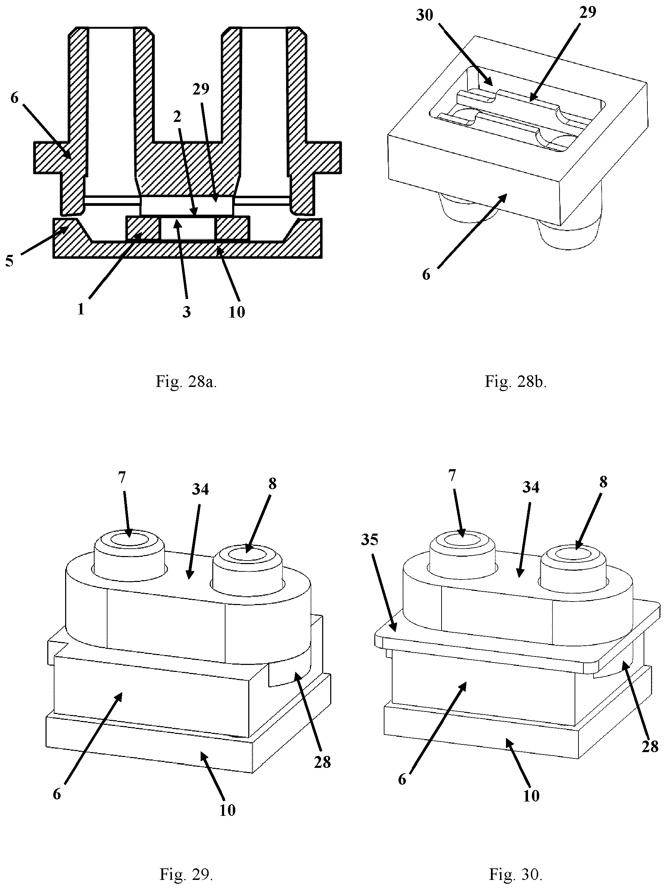

Figure 28a shows a schematic cross section of a flow sensor assembly in which the guide structures **29** vertically protrude in the centre of the flow sensor assembly, and contact the flow sensing surface **2.** Figure 28b shows a 3D drawing of the lid internal design of the embodiment of Figure 28a. This embodiment shows a flow sensor assembly comprising a flow sensing die **1,** comprising a flow sensing surface **2,** comprising a membrane **3.** The flow sensing lid **6** comprises side channels **30** and flow controlling guides **29** that extend across the fluidic cavity and contain varying heights. The guide structures **29** vertically protrude in the centre of the flow sensor assembly, and contact the flow sensing surface **2,** creating an enclosed fluidic chamber with the flow sensing channel over the flow sensing die **1.**

In this embodiment, the guide structures **29** contact the flow sensing die **1** and completely separate the flow sensing channel from the side channels **30.** This results in any side channel vortices being unable to negatively affect the flow over the flow sensing die **1** within the flow sensing channel.

Figure 29 shows a 3D drawing of a flow sensor assembly. This embodiment shows a flow sensor assembly comprising a substrate **10,** a lid **6** comprising of lips **28,** inlet channel **7** and outlet channel **8.** This embodiment also comprises a gasket **34.**

In this embodiment, the gasket **34** is placed around the inlet channel **7** and the outlet channel **8** and comes into contact with the outside surface of the flow sensor assembly lid **6.** When the flow sensor assembly is connected into the system it is being used with, the gasket **34** will be compressed between the lid **6** and the adjoining system, and provide an airtight seal between the flow sensor assembly and the fixture it is being used for.

Figure 30 shows a 3D drawing of a flow sensor assembly. This embodiment shows a flow sensor assembly comprising a package **10,** a lid **6** comprising of lips **28,** inlet channel **7** and outlet channel **8. This** embodiment also comprises a gasket **34** and an adhesive layer or tape **35.**

In this embodiment, there is pressure sensitive adhesive tape **35** in addition to the gasket **34.** The adhesive tape is used to help create an airtight seal between the flow sensor assembly lid **6** and the gasket **34,** in addition to ensuring that the gasket remains attached to the flow sensor assembly with in-situ measurements.

The skilled person will understand that in the preceding description and appended claims, positional terms such as 'above', 'overlap', 'under', 'lateral', etc. are made with reference to conceptual illustrations of an device, such as those showing standard cross-sectional perspectives and those shown in the appended drawings. These terms are used for ease of reference but are not intended to be of limiting nature. These terms are therefore to be understood as referring to a device when in an orientation as shown in the accompanying drawings.

Although the invention has been described in terms of preferred embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in the disclosure, whether alone or in any appropriate combination with any other feature disclosed or illustrated herein.

Many other effective alternatives will occur to the person skilled in the art. It will be understood the disclosure is not limited to the described embodiments, but encompasses all the modifications that fall within the scope of the appended claims.

## Claims

1. A flow sensor assembly comprising:
a first substrate (10);
a flow sensor (1) located over the first substrate (10);
a lid (6) located over the sensor (1);
a flow inlet channel (7);
a flow outlet channel (8);
a flow sensing channel between the flow inlet channel (7) and the flow outlet channel (8); and **characterised in that** it further comprises:
one or more guide structures (29), wherein the guide structures (29) are incorporated into the lid (6) and extend partially down towards the flow sensor (1) so as to partially separate the flow sensing channel from one or more regions (30) between the inlet channel (7) and outlet channel (8) outside the flow sensing channel, and
wherein a surface of the flow sensor (1), a surface of the lid (6) and a surface of the one or more guide structures (29) cooperate to form the flow sensing channel.

2. The flow sensor assembly according to claim 1, wherein the one or more guide structures (29) comprise one or more protrusions on an inner surface of the lid (6).

3. The flow sensor assembly according to claim 1 or 2, wherein the flow sensing channel is above a centre of the flow sensor (1), and wherein the one or more regions comprise one or more side channels (30) around the flow sensor.

4. The flow sensor assembly according to any preceding claim, wherein the flow sensor assembly comprises bond wires (4) electrically connected to the flow sensor (1), and wherein the guide structures (29) separate the bond wires (4) from the flow sensing channel.

5. The flow sensor assembly according to any preceding claim, further comprising a gasket (34), wherein an outside surface of the lid (6) abuts the gasket (34); and
optionally wherein the assembly further comprises an adhesive layer (35) between the gasket (34) and the lid (6).

6. **The** flow sensor assembly according to any preceding claim, wherein the one or more guide structure (29) are of non-uniform height along the flow channel.

7. **The** flow sensor assembly according to claim 6, wherein the one or more guide structures (29) have a first height in regions closer to the flow inlet channel (7) and flow outlet channel (8), wherein the first height is lower than a second height in regions of the of the one or more guide structures (29) towards the centre of the flow sensor assembly and closer to the flow sensor (1).

8. **The** flow senor assembly according to claim 6, wherein a height of the one or more guide structures (29) is greater in a region around the flow inlet channel (7).

9. The flow sensor assembly of claim 8, wherein a bottom surface of the flow sensing channel is formed by the combination of the flow sensor (1) and a filler material (11), and wherein a top surface of the flow sensing channel is formed by the lid (6), and wherein one or more side walls of the flow sensing channel are formed from the guide structures (29).

10. The flow sensor assembly of any preceding claim, wherein the guide structures (29) do not contact the flow sensor (1).

11. The flow sensor assembly according to any preceding claim, wherein the guide structures (29) are configured to separate vortices from the flow sensing channel.

12. A method of manufacturing a flow sensor assembly, the method comprising:
forming a first substrate (10);
forming a flow sensor (1) over the first substrate (10);
forming a lid (6) over the flow sensor (1);
forming a flow inlet channel (7);
forming a flow outlet channel (8);
forming a flow sensing channel between the flow inlet channel (7) and the flow outlet channel (8); and **characterised in that** it further comprises:
forming one or more guide structures (29), wherein the guide structures (29) are incorporated into the lid (6) and extend partially down towards the flow sensor (1) so as to partially separate the flow sensing channel from one or more regions (30) between the inlet channel (7) and outlet channel (8) outside the flow sensing channel, and
wherein a surface of the flow sensor (1), a surface of the lid (6), and a surface of the one or more guide structures (29) cooperate to form the flow sensing channel.

## Patentansprüche

1. Durchflusssensoranordnung, umfassend:
ein erstes Substrat (10);
einen Durchflusssensor (1), der sich über dem ersten Substrat (10) befindet;
einen Deckel (6), der sich über dem Sensor (1) befindet;
einen Durchfluss-Einlasskanal (7);
einen Durchfluss-Auslasskanal (8);
einen Durchfluss-Messkanal zwischen dem Durchfluss-Einlasskanal (7) und dem Durchfluss-Auslasskanal (8); und **dadurch gekennzeichnet, dass** sie weiter umfasst:
eine oder mehrere Führungsstrukturen (29), wobei die Führungsstrukturen (29) in den Deckel (6) integriert sind und sich teilweise nach unten in Richtung des Durchflusssensors (1) erstrecken, um den Durchfluss-Messkanal teilweise von einem oder mehreren Bereichen (30) zwischen dem Einlasskanal (7) und dem Auslasskanal (8) außerhalb des Durchfluss-Messkanals zu trennen, und
wobei eine Oberfläche des Durchflusssensors (1), eine Oberfläche des Deckels (6) und eine Oberfläche der einen oder mehreren Führungsstrukturen (29) zusammenwirken, um den Durchfluss-Messkanal zu bilden.

2. Durchflusssensoranordnung nach Anspruch 1, wobei die eine oder mehreren Führungsstrukturen (29) einen oder mehrere Vorsprünge auf einer Innenoberfläche des Deckels (6) umfassen.

3. Durchflusssensoranordnung nach Anspruch 1 oder 2, wobei sich der Durchfluss-Messkanal über einer Mitte des Durchflusssensors (1) befindet, und wobei der eine oder die mehreren Bereiche einen oder mehrere Seitenkanäle (30) um den Durchflusssensor herum umfassen.

4. Durchflusssensoranordnung nach einem vorstehenden Anspruch, wobei die Durchflusssensoranordnung Bonddrähte (4) umfasst, die elektrisch mit dem Durchflusssensor (1) verbunden sind, und wobei die Führungsstrukturen (29) die Bonddrähte (4) vom Durchfluss-Messkanal trennen.

5. Durchflusssensoranordnung nach einem vorstehenden Anspruch, die weiter eine Dichtung (34) umfasst, wobei eine Außenoberfläche des Deckels (6) an der Dichtung (34) anliegt; und
wobei die Anordnung weiter optional eine Klebeschicht (35) zwischen der Dichtung (34) und dem Deckel (6) umfasst.

6. Durchflusssensoranordnung nach einem vorstehenden Anspruch, wobei die eine oder mehreren Führungsstrukturen (29) entlang des Durchflusskanals eine ungleichmäßige Höhe aufweisen.

7. Durchflusssensoranordnung nach Anspruch 6, wobei die eine oder mehreren Führungsstrukturen (29) eine erste Höhe in Bereichen näher am Durchfluss-Einlasskanal (7) und Durchfluss-Auslasskanal (8) aufweisen, wobei die erste Höhe niedriger ist als eine zweite Höhe in Bereichen der einen oder mehreren Führungsstrukturen (29) in Richtung der Mitte der Durchflusssensoranordnung und näher am Durchflusssensor (1).

8. Durchflusssensoranordnung nach Anspruch 6, wobei eine Höhe der einen oder mehreren Führungsstrukturen (29) in einem Bereich um den Durchfluss-Einlasskanal (7) größer ist.

9. Durchflusssensoranordnung nach Anspruch 8, wobei eine Bodenoberfläche des Durchfluss-Messkanals durch die Kombination des Durchflusssensors (1) und eines Füllermaterials (11) gebildet wird, und wobei eine obere Oberfläche des Durchfluss-Messkanals durch den Deckel (6) gebildet wird, und wobei eine oder mehrere Seitenwände des Durchfluss-Messkanals aus den Führungsstrukturen (29) gebildet sind.

10. Durchflusssensoranordnung nach einem vorstehenden Anspruch, wobei die Führungsstrukturen (29) den Durchflusssensor (1) nicht berühren.

11. Durchflusssensoranordnung nach einem vorstehenden Anspruch, wobei die Führungsstrukturen (29) konfiguriert sind, um Wirbel aus dem Durchfluss-Messkanal zu trennen.

12. Verfahren zum Herstellen einer Durchflusssensoranordnung, wobei das Verfahren umfasst:
Bilden eines ersten Substrats (10);
Bilden eines Durchflusssensors (1) über dem ersten Substrat (10);
Bilden eines Deckels (6) über dem Durchflusssensor (1);
Bilden eines Durchfluss-Einlasskanals (7);
Bilden eines Durchfluss-Auslasskanals (8);
Bilden eines Durchfluss-Messkanals zwischen dem Durchfluss-Einlasskanal (7) und dem Durchfluss-Auslasskanal (8); und **dadurch gekennzeichnet, dass** es weiter umfasst:
Bilden einer oder mehrerer Führungsstrukturen (29), wobei die Führungsstrukturen (29) in den Deckel (6) integriert sind und sich teilweise nach unten in Richtung des Durchflusssensors (1) erstrecken, um den Durchfluss-Messkanal teilweise von einem oder mehreren Bereichen (30) zwischen dem Einlasskanal (7) und dem Auslasskanal (8) außerhalb des Durchfluss-Messkanals zu trennen, und
wobei eine Oberfläche des Durchflusssensors (1), eine Oberfläche des Deckels (6) und eine Oberfläche der einen oder mehreren Führungsstrukturen (29) zusammenwirken, um den Durchfluss-Messkanal zu bilden.

## Revendications

1. Ensemble capteur de débit comprenant :
un premier substrat (10) ;
un capteur de débit (1) situé sur le premier substrat (10) ;
un couvercle (6) situé au-dessus du capteur (1) ;
un canal d'admission d'écoulement (7) ;
un canal de sortie d'écoulement (8) ;
un canal de détection de débit entre le canal d'admission d'écoulement (7) et le canal de sortie d'écoulement (8) ; et **caractérisé en ce qu'**il comprend en outre :
une ou plusieurs structures de guidage (29), dans lequel les structures de guidage (29) sont incorporées dans le couvercle (6) et s'étendent partiellement vers le bas en direction du capteur de débit (1) de manière à séparer partiellement le canal de détection de débit d'une ou plusieurs régions (30) entre le canal d'admission (7) et le canal de sortie (8) à l'extérieur du canal de détection de débit, et
dans lequel une surface du capteur de débit (1), une surface du couvercle (6) et une surface des une ou plusieurs structures de guidage (29) coopèrent pour former le canal de détection de débit.

2. Ensemble capteur de débit selon la revendication 1, dans lequel les une ou plusieurs structures de guidage (29) comprennent une ou plusieurs saillies sur une surface intérieure du couvercle (6).

3. Ensemble capteur de débit selon la revendication 1 ou 2, dans lequel le canal de détection de débit est au-dessus d'un centre du capteur de débit (1), et dans lequel les une ou plusieurs régions comprennent un ou plusieurs canaux latéraux (30) autour du capteur de débit.

4. Ensemble capteur de débit selon une quelconque revendication précédente, dans lequel l'ensemble capteur de débit comprend des fils de liaison (4) connectés électriquement au capteur de débit (1), et dans lequel les structures de guidage (29) séparent les fils de liaison (4) du canal de détection de débit.

5. Ensemble capteur de débit selon une quelconque revendication précédente, comprenant en outre un joint (34), dans lequel une surface extérieure du couvercle (6) vient en butée contre le joint (34) ; et
éventuellement dans lequel l'ensemble comprend en outre une couche adhésive (35) entre le joint (34) et le couvercle (6).

6. Ensemble capteur de débit selon une quelconque revendication précédente, dans lequel les une ou plusieurs structures de guidage (29) sont de hauteur non uniforme le long du canal d'écoulement.

7. Ensemble capteur de débit selon la revendication 6, dans lequel les une ou plusieurs structures de guidage (29) présentent une première hauteur dans des régions plus proches du canal d'admission d'écoulement (7) et du canal de sortie d'écoulement (8), dans lequel la première hauteur est inférieure à une seconde hauteur dans des régions des une ou plusieurs structures de guidage (29) vers le centre de l'ensemble capteur de débit et plus proches du capteur de débit (1).

8. Ensemble capteur de débit selon la revendication 6, dans lequel une hauteur des une ou plusieurs structures de guidage (29) est plus grande dans une région autour du canal d'admission d'écoulement (7).

9. Ensemble capteur de débit selon la revendication 8, dans lequel une surface inférieure du canal de détection de débit est formée par la combinaison du capteur de débit (1) et d'un matériau de remplissage (11), et dans lequel une surface supérieure du canal de détection de débit est formée par le couvercle (6), et dans lequel une ou plusieurs parois latérales du canal de détection de débit sont formées à partir des structures de guidage (29).

10. Ensemble capteur de débit selon une quelconque revendication précédente, dans lequel les structures de guidage (29) ne sont pas en contact avec le capteur de débit (1).

11. Ensemble capteur de débit selon une quelconque revendication précédente, dans lequel les structures de guidage (29) sont configurées pour séparer des tourbillons du canal de détection de débit.

12. Procédé de fabrication d'un ensemble capteur de débit, le procédé comprenant :
la formation d'un premier substrat (10) ;
la formation d'un capteur de débit (1) sur le premier substrat (10) ;
la formation d'un couvercle (6) sur le capteur de débit (1) ;
la formation d'un canal d'admission d'écoulement (7) ;
la formation d'un canal de sortie d'écoulement (8) ;
la formation d'un canal de détection de débit entre le canal d'admission d'écoulement (7) et le canal de sortie d'écoulement (8) ; et **caractérisé en ce qu'**il comprend en outre :
la formation d'une ou plusieurs structures de guidage (29), dans lequel les structures de guidage (29) sont incorporées dans le couvercle (6) et s'étendent partiellement vers le bas en direction du capteur de débit (1) de manière à séparer partiellement le canal de détection de débit d'une ou plusieurs régions (30) entre le canal d'admission (7) et le canal de sortie (8) à l'extérieur du canal de détection de débit, et
dans lequel une surface du capteur de débit (1), une surface du couvercle (6) et une surface des une ou plusieurs structures de guidage (29) coopèrent pour former le canal de détection de débit.
